# EUROPEAN PATENT APPLICATION

(11) **EP 4 604 663 A1**
(43) Date of publication of application: **20.08.2025**
(21) Application number: 25157609.6
(22) Date of filing: 13.02.2025
(51) Int. Cl.: H04W 76/15, H04W 84/12

(54) **COMMUNICATION DEVICE, CONTROL METHOD THEREOF, COMPUTER-READABLE STORAGE MEDIUM STORING A PROGRAM, AND PROGRAM**

(30) Priority: 15.02.2024 JP 2024021446
(71) Applicant: CANON KABUSHIKI KAISHA, Tokyo 146-8501 (JP)
(72) Inventor: SUGAWARA, Wahei, Ohta-ku, Tokyo 146-8501 (JP)
(74) Representative: TBK

(57) **Abstract**

A device (120) including: first operation control means configured to cause the device (120) to operate in a first mode that is a mode for the device (120) to operate as a parent station and perform communication compliant with an IEEE 802.11 standard; second operation control means configured to cause the device (120) to operate in a second mode that is a mode for the device (120) to operate as a parent station and perform communication compliant with an IEEE 802.11 standard, and that is different from the first mode; and control means configured to control the device (120) to execute multi-link communication compliant with an IEEE 802.11be standard as communication in the first mode, and control the device (120) not to perform the multi-link communication, and to perform communication different from the multi-link communication, as communication in the second mode.

## Description

### BACKGROUND OF THE INVENTION

### Field of the Invention

The present invention relates to a communication device capable of simultaneously utilizing a plurality of links in a wireless LAN compliant with IEEE 802.11, a control method thereof, a computer-readable storage medium storing a program, and a program.

### Description of the Related Art

With the increase in data communication amounts in recent years, the development of wireless communication technologies such as wireless Local Area Networks (LANs) and the like is progressing. The IEEE 802.11 standard series, known as one of the major wireless LAN communication standards, includes standards such as IEEE 802.11a/b/g/n/ac/ax. For example, the IEEE 802.11ax standard uses Orthogonal Frequency Division Multiple Access (OFDMA) to standardize techniques for improving communication speeds under congested conditions in addition to providing high peak throughput of up to 9.6 gigabits per second (Gbps) (see Japanese Patent Laid-Open No. 2018-50133).

The IEEE 802.11be standard, which is a successor standard aimed at further improving throughput, frequency utilization efficiency, and communication latency, is currently under consideration. In the IEEE 802.11be standard, multi-link communication is being considered, in which, for example, a single access point (AP) establishes a plurality of links with a single station (STA) over a plurality of frequency channels, and communication is performed over those channels in parallel. Multi-link communication makes it possible to achieve better communication throughput than when communicating on a single frequency channel.

### SUMMARY OF THE INVENTION

The present invention provides a technique capable of improving the usability of a wireless connection for an electronic device capable of using a plurality of links simultaneously.

The present invention in its first aspect provides a communication device as specified in claims 1 to 18.

The present invention in its second aspect provides a control method for a communication device as specified in claim 19.

The present invention in its third aspect provides a computer-readable storage medium storing a program as specified in claim 20.

The present invention in its fourth aspect provides a program as specified in claim 21.

According to the present invention, it is possible to improve the usability of a wireless connection for an electronic device capable of using a plurality of links simultaneously.

Further features of the present invention will become apparent from the following description of exemplary embodiments with reference to the attached drawings.

### BRIEF DESCRIPTION OF THE DRAWINGS

FIG. 1 is a block diagram illustrating the configuration of a system.
FIGS. 2A and 2B are block diagrams illustrating the configuration of an MFP.
FIGS. 3A to 3F are diagrams illustrating screens displayed in a console unit of the MFP.
FIGS. 4A and 4B are block diagrams illustrating the configuration of a mobile terminal device.
FIG. 5 is a diagram illustrating the configuration of an access point (AP).
FIG. 6 is a diagram illustrating processing pertaining to multi-link communication.
FIG. 7 is a diagram illustrating processing executed by the MFP.
FIG. 8 is a diagram illustrating processing executed by the MFP.
FIG. 9 is a diagram illustrating processing executed by the MFP.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

With the proliferation of electronic devices capable of communicating simultaneously over a plurality of links as described above, there is a need to improve the usability pertaining to wireless connections for such electronic devices.

According to the present invention, it is possible to improve the usability of a wireless connection for an electronic device capable of using a plurality of links simultaneously.

### First Embodiment

### System Configuration

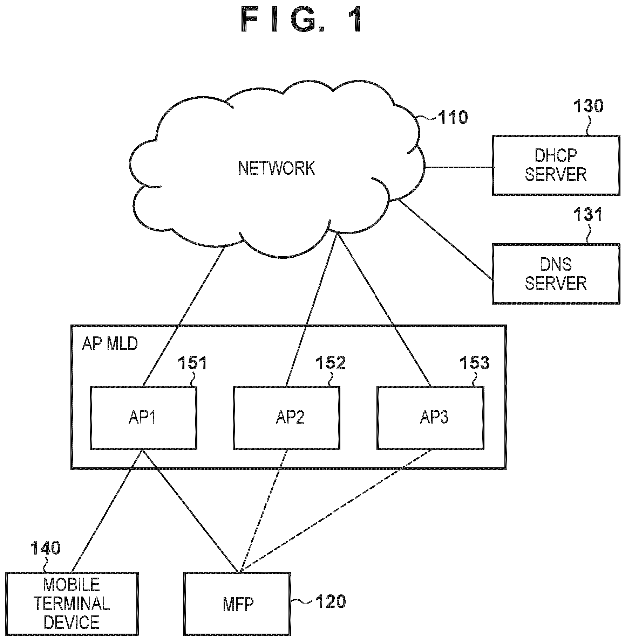

FIG. 1 illustrates an example of the configuration of a system according to the present embodiment. In one example, this system is a wireless communication system in which a plurality of communication devices can communicate with each other wirelessly. In the example illustrated in FIG. 1, a mobile terminal device 140 and an MFP 120 serving as communication devices, an AP 151, an AP 152, and an AP 153, which are access points, a DHCP server 130, and a network 110 are provided. Note that in the figures, the AP 151 may be indicated as "AP 1", the AP 152 as "AP 2", and the AP 153 as "AP 3".

The mobile terminal device 140 is a device having a wireless communication function that uses wireless LAN or the like. "Wireless LAN" may be called "WLAN" hereinafter. The mobile terminal device 140 may be a personal information terminal such as a Personal Digital Assistant (PDA), a mobile phone (a smartphone), a digital camera, a personal computer, or the like.

The MFP 120 is a printing device having a printing function, and may further have a reading function (a scanner), a fax function, a telephone function, and the like. The MFP 120 according to the present embodiment also has a communication function that enables wireless communication with the mobile terminal device 140. Although the present embodiment describes a case where the MFP 120 is used as an example, the configuration is not limited thereto. For example, a scanner device, a projector, a mobile terminal, a smartphone, a laptop PC, a tablet terminal, a PDA, a digital camera, a music playback device, a television, a smart speaker, or the like having a communication function may be used instead of the MFP 120. Note that "MFP" is an acronym for "Multi Function Peripheral".

The AP 151 is provided separate from (outside) the mobile terminal device 140 and the MFP 120, and functions as a WLAN base station device. A communication device having a WLAN communication function can communicate in WLAN infrastructure mode via the AP 151. Note that access points may be called "APs" hereinafter. Infrastructure mode may also be called "wireless infrastructure communication mode". The AP 151 communicates wirelessly with a communication device that has permitted (authenticated) a connection to itself, and relays wireless communication between that communication device and other communication devices. The AP 151 can, for example, be connected to a wired communication network, and can relay communication between a communication device connected to that wired communication network and another communication device wirelessly connected to the AP 151.

The AP 152 and the AP 153 have the same functions as the AP 151, and the MFP 120 switches its connection from the AP 151 to the AP 152 and the AP 153 as necessary. The AP 151, the AP 152, and the AP 153 are AP Multi-Link Devices (MLDs) that support multi-link communication (described later).

The DHCP server 130 connects to the MFP 120 via the AP 151 and the network 110, and provides services to the MFP 120 by responding to requests from the MFP 120. Although FIG. 1 illustrates a configuration in which the DHCP server 130 is connected as a device separate from the AP 151, the AP 152, and the AP 153, the configuration may be such that the AP 151, the AP 152, and the AP 153 have DHCP server functionality. A DNS server 131 is connected to the MFP 120, the mobile terminal device 140, and the like via the AP 151 and the network 110, and provides services for name resolution by responding to requests from the MFP 120, the mobile terminal device 140, and the like. Here, the network 110 may the Internet, or may be a private network in a business, a mobile phone network, or the like.

### External Configuration of MFP

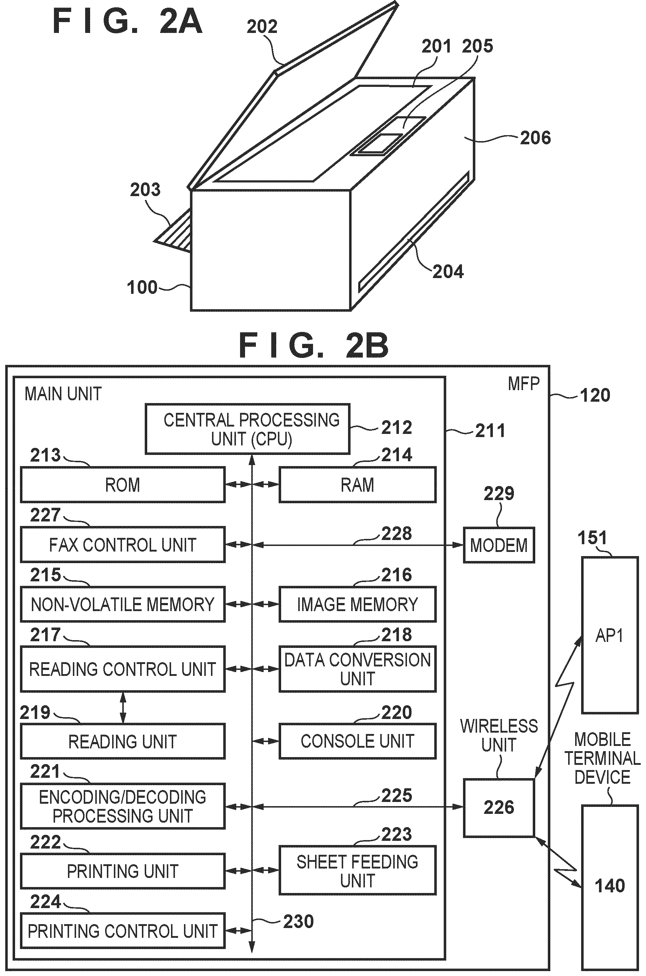

FIG. 2A illustrates an example of the external configuration of the MFP 120. The MFP 120 includes a document platform 201, a document cover 202, a printing paper insertion port 203, a printing paper discharge port 204, and a console unit 205, for example. The document platform 201 is a platform for placing a document to be read. The document cover 202 is a cover for securing a document placed on the document platform 201, and for ensuring that light from a light source that illuminates the document does not escape to the exterior when the document is being read. The printing paper insertion port 203 is an insertion port in which various sizes of sheets can be set. The printing paper discharge port 204 is a discharge port for discharging a sheet which has been printed onto. Paper set in the printing paper insertion port 203 is conveyed one sheet at a time to a printing unit, where the sheet is printed onto and then discharged from the printing paper discharge port 204. The console unit 205 is configured including keys such as text input keys, a cursor key, an OK key, a cancel key, and the like, as well as LEDs, an LCD, and the like, and is configured such that a user can launch the various functions of the MFP, manipulate various settings, and the like. The console unit 205 may also be configured including a touch panel display. The MFP 120 has a WLAN wireless communication function and therefore is configured also including a wireless communication antenna 206 for that wireless communication, although the antenna 206 is not necessarily visible from the exterior. Like the mobile terminal device 140, the MFP 120 can communicate wirelessly over the WLAN in frequency bands such as the 2.4 GHz band, the 5 GHz band, the 6 GHz band, or the like.

### MFP Configuration

FIG. 2B illustrates an example of the configuration of the MFP 120. The MFP 120 is configured including a main unit 211 that performs main control of the device itself, and a wireless unit 226, which is a single communication module that performs WLAN communication using at least one common antenna. The MFP 120 is also configured including a modem 229 for wired communication, for example. The main unit 211 is simply a unit including function blocks other than the wireless unit 226 and the modem 229. The main unit 211 is configured including, for example, a central processing unit (CPU) 212, a ROM 213, a RAM 214, a non-volatile memory 215, an image memory 216, a reading control unit 217, a data conversion unit 218, a reading unit 219, and an encoding/decoding processing unit 221. The main unit 211 also includes, for example, a printing unit 222, a sheet feeding unit 223, a printing control unit 224, and a console unit 220. The function units in the main unit 211 are connected to each other by a system bus 230 managed by the CPU 212. Additionally, the main unit 211 and the wireless unit 226 are connected by a dedicated bus 225, for example, and the main unit 211 and the modem 229 are connected by a bus 228, for example.

The CPU 212 is a system control unit including at least one processor, and controls the MFP 120 as a whole. The processing by the MFP 120 described below is implemented by the CPU 212 executing programs stored in the ROM 213, for example. Note that dedicated hardware for each type of processing may be provided. The ROM 213 stores control programs executed by the CPU 212, embedded OS programs, and the like. In the present embodiment, the CPU 212 performs software control such as scheduling, task switching, and the like by executing each control program stored in the ROM 213 under the management of an embedded OS, which is also stored in the ROM 213.

The RAM 214 is constituted by an SRAM or the like. The RAM 214 stores data such as program control variables, data such as setting values registered by the user and management data of the MFP 120, and the like. In addition, the RAM 214 can be used as various types of working buffers. The non-volatile memory 215 is constituted by a memory such as a flash memory, for example, and continues to store data even when the MFP 120 is turned off. The image memory 216 is constituted by a memory such as a DRAM. The image memory 216 stores image data received through the wireless unit 226, image data processed by the encoding/decoding processing unit 221, and the like. Note that the memory configuration of the MFP 120 is not limited to the configuration described above. The data conversion unit 218 analyzes data in various formats, converts image data into printing data, and the like.

The reading control unit 217 controls the reading unit 219 (e.g., a contact-type image sensor (CIS)) to optically read a document placed on the document platform 201. The reading control unit 217 converts an image obtained by optically reading the document into electrical image data (an image signal) and outputs the image data. At this time, the reading control unit 217 may perform various types of image processing, such as binarization, half-tone processing, and the like before outputting the image data.

The console unit 220 is the console unit 205 described with reference to FIG. 2A, and displays items in a display under display control by the CPU 212, generates signals in response to accepting user operations, and the like.

The encoding/decoding processing unit 221 performs encoding processing, decoding processing, scaling processing, and the like on image data handled by the MFP 120 (JPEG, PNG, and the like).

The sheet feeding unit 223 holds sheets for printing. The sheet feeding unit 223 can supply sheets set therein under the control of the printing control unit 224. The sheet feeding unit 223 may include a plurality of sheet feeding units to hold a plurality of types of sheets in a single apparatus, and from which sheet feeding unit sheets are fed can be controlled under the control of the printing control unit 224.

The printing control unit 224 applies various types of image processing, such as smoothing processing, print density correction processing, color correction, and the like, to the image data to be printed, and outputs the processed image data to the printing unit 222. The printing unit 222 is configured to be capable of executing ink jet printing processing, for example, so that ink supplied from an ink tank is ejected from a print head and an image is recorded on a recording medium such as paper. Note that the printing unit 222 may be configured to be capable of executing other types of printing processing, such as electrophotographic printing. The printing control unit 224 can also periodically read out information on the printing unit 222 and update status information and the like stored in the RAM 214, including the remaining amount in the ink tank, the state of the print head, and the like.

The wireless unit 226 is a unit capable of providing a WLAN communication function, and is capable of providing functions equivalent to a WLAN unit 401 of the mobile terminal device 140, for example. In other words, according to the WLAN standard, the wireless unit 226 converts data into packets and sends the packets to other devices, and also restores packets from other external devices into the original data thereof and outputs the data to the CPU 212.

The wireless unit 226 is capable of communicating as a station or access point compliant with the IEEE 802.11 standard series. In particular, the wireless unit 226 is capable of communication compliant with IEEE 802.11a/b/g/n/ac/ax/be. In the following, a station may be called an "STA", and an access point may be called an "AP".

The wireless unit 226 supports IEEE 802.11ax, i.e., Wi-Fi 6 (registered trademark), and is capable of processing compliant with IEEE 802.11 ax. In other words, the MFP 120 is capable of either or both of processing as an STA that supports (is compliant with) OFDMA, and operations (processing) as an STA that supports (is compliant with) TWT. "OFDMA" is an acronym for "Orthogonal Frequency-Division Multiple Access". "TWT" is an acronym for "Target Wake Time". Supporting TWT means that the timing of data communication from a parent device to the STA is adjusted. The wireless unit 226 (the MFP 120) serving as the STA shifts the communication function to a sleep state when there is no need to stand by for signal reception. This makes it possible to suppress power consumption.

The wireless unit 226 also supports Wi-Fi 6E (registered trademark). In other words, the wireless unit 226 is also capable of communicating in the 6 GHz band (5.925 GHz to 7.125 GHz). Unlike the 5 GHz band, the 6 GHz band does not have a band in which Dynamic Frequency Selection (DFS) is performed. As such, in communication in the 6 GHz band, communication will not be cut off due to DFS standby time, which can be expected to improve the communication.

Furthermore, the wireless unit 226 supports IEEE 802.11be, i.e., Wi-Fi 7 (registered trademark), and is capable of processing compliant with IEEE 802.11be. In multi-link communication, which is considered in the IEEE 802.11be standard, a plurality of links are established between an STA and an AP over a plurality of frequency channels, and communication is performed over those channels in parallel. This makes it possible to improve throughput by communicating data over at least two links at the same time.

The wireless unit 226 is also capable of operating as a Wi-Fi parent station (parent device) and as a child station (child device). "Parent station" refers to a device that constructs a wireless network, and is a device that provides child stations with the parameters used to connect to the wireless network (an access point). The parameters used to connect to the wireless network are parameters pertaining to a channel used by the parent station, for example. By receiving these parameters, a child station connects to the wireless network constructed by the parent station using the channel used by the parent station. Note that the wireless unit 226 can operate as a parent station and as a child station at the same time. For example, the wireless unit 226 may include a wireless chip capable of operating as a parent station and as a child station in parallel.

Note that the mobile terminal device 140 and the MFP 120 are capable of P2P (WLAN) communication that is based on WFD, and the wireless unit 226 has a software access point (software AP) function or a group owner function. In other words, the wireless unit 226 is capable of constructing P2P communication networks, setting channels that can be used in P2P communication, and the like.

### MFP Console Unit

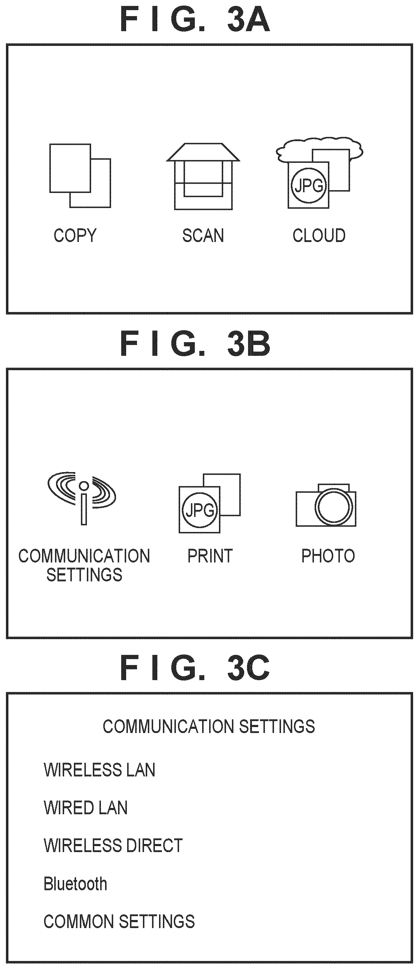

FIGS. 3A to 3F schematically illustrate examples of screens displayed in a display (a touchscreen) included in the console unit 220 of the MFP 120. FIG. 3A illustrates an example of a home screen displayed when the MFP 120 is turned on and operations such as printing, scanning, or the like are not underway (an "idle state" or a "standby state"). In FIG. 3A, display items indicating "Copy", "Scan", and "Cloud" (menu items) are displayed. "Cloud" is a menu item pertaining to a cloud function that uses Internet communication. Settings in the MFP 120 can be made, the execution of functions can be started, and the like by operating keys, the touch panel, or the like to select one of the menu items. The MFP 120 can seamlessly display a screen different from that illustrated in FIG. 3A by accepting an operation of a key, the touch panel, or the like in the home screen illustrated in FIG. 3A.

FIG. 3B is an example of the display of another part of the home screen, and is a screen transitioned to in response to an operation for displaying another page of the home screen (an operation for sliding to the left or the right) being made in the state illustrated in FIG. 3A. In FIG. 3B, display items (menu items) indicating "Communication Settings", "Print", and "Photo" are displayed. When one of these menu items is selected, the function corresponding to the selected menu item, i.e., one of a printing function, a photo function, and communication settings, is executed.

FIG. 3C is an example of the display of a menu screen for the communication settings, displayed when "Communication Settings" has been selected in the screen illustrated in FIG. 3B. "Wireless LAN", "Wired LAN", "Wireless Direct", "Bluetooth", and "Common settings" are displayed as menu items (options) in the communication settings menu screen. "Wireless LAN", "Wired LAN", and "Wireless Direct" are menu items for LAN settings, and settings such as wired connection settings, settings for enabling and disabling wireless infrastructure communication mode, settings for enabling and disabling a P2P mode such as WFD and software AP mode, and the like can be set using these items. When the "Wireless LAN" item is selected and the wireless LAN is enabled by a user operation, wireless infrastructure communication mode is enabled. When the "Wireless Direct" item is selected and wireless direct is enabled by a user operation, the P2P (WLAN) mode is enabled. A common settings menu pertaining to each connection format is also displayed in this screen. Furthermore, the user can set the frequency band, frequency channel, and the like of the wireless LAN from this screen.

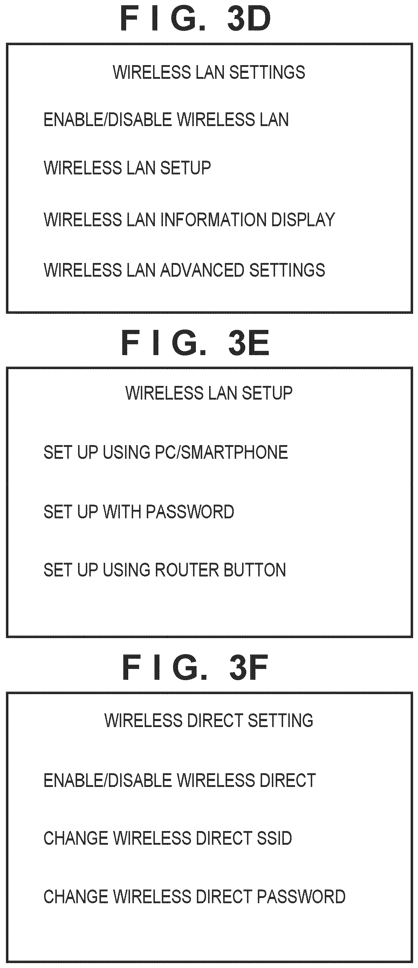

FIG. 3D is an example of the display of a menu screen for the wireless LAN settings, displayed when "Wireless LAN" has been selected in the screen illustrated in FIG. 3C. "Enable/Disable Wireless LAN", "Wireless LAN Setup", "Wireless LAN Information Display", and "Wireless LAN Advanced Settings" are displayed as menu items (options) in the wireless LAN settings menu screen. Settings such as enabling/disabling wireless infrastructure communication mode, wireless LAN setup, displaying wireless LAN information, wireless LAN advanced settings, and the like can be made using these items.

FIG. 3E is an example of the display of a menu screen for the wireless LAN setup, displayed when "Wireless LAN Setup" has been selected in the screen illustrated in FIG. 3D. "Set up using PC/smartphone", "Set up with password", and "Set up using router button" are displayed as menu items (options) in the wireless LAN setup menu screen. From these items, wireless LAN setup can be performed, such as setup using a connection setting mode (described later), setup by entering a password, setup using a pushbutton method, and the like.

FIG. 3F is an example of the display of a menu screen for the wireless direct settings, displayed when "Wireless Direct" has been selected in the screen illustrated in FIG. 3C. "Enable/Disable Wireless Direct", "Change Wireless Direct SSID", and "Change Wireless Direct Password" are displayed as menu items (options) in the wireless direct settings menu screen. Settings such as enabling/disabling wireless direct, changing the wireless direct SSID, changing the wireless direct password, and the like can be set using these items.

### External Configuration of Mobile Terminal Device

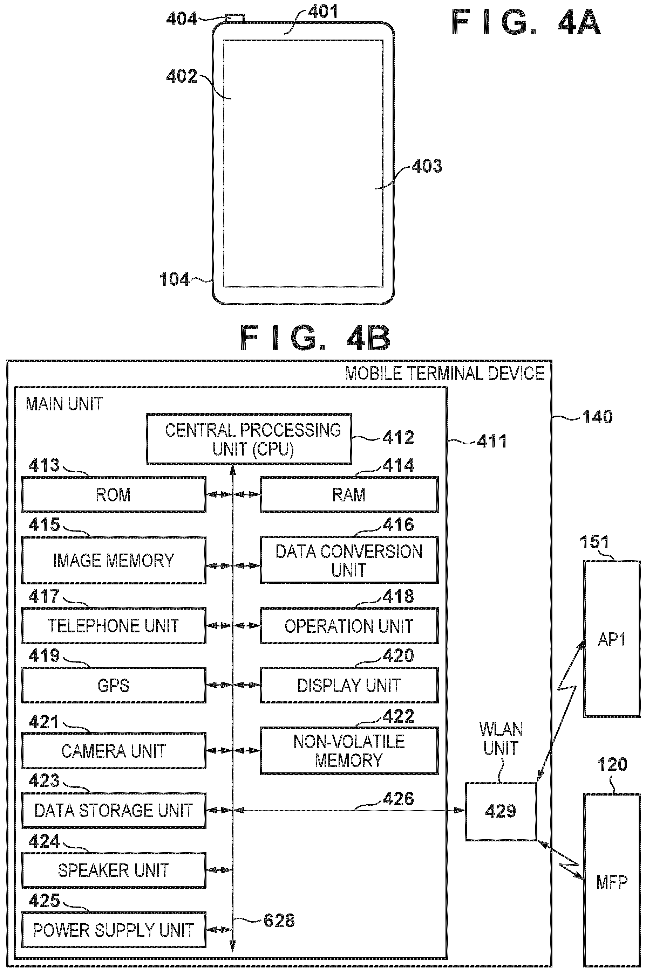

FIG. 4A is a diagram illustrating an example of the external configuration of the mobile terminal device 140. The present embodiment will describe a case where the mobile terminal device 140 is a typical smartphone, for example. Note that the mobile terminal device 140 is configured including a display unit 402, an operation unit 403, and a power key 404, for example. The display unit 402 is a display having a Liquid Crystal Display (LCD)-based display mechanism, for example. Note that the display unit 402 may display information using a Light Emitting Diode (LED) or the like, for example. The mobile terminal device 140 may also have a function for outputting information by audio in addition to or instead of the display unit 402. The operation unit 403 is configured including physical keys such as keys, buttons, and the like, a touch panel, and the like for detecting user operations. Note that in this example, the information display in the display unit 402 and the acceptance of user operations by the operation unit 403 are performed using a common touch panel display, and thus the display unit 402 and the operation unit 403 are implemented as a single device. In this case, for example, button icons or a software keyboard are displayed using a display function of the display unit 402, and the user touching those locations is detected using an operation reception function of the operation unit 403. Note that the display unit 402 and the operation unit 403 may be separate, and the hardware for display and the hardware for accepting operations may be provided individually. The power key 404 is a physical key for accepting user operations for turning the mobile terminal device 140 on or off.

The mobile terminal device 140 includes the WLAN unit 401, which provides WLAN communication functionality, but is not necessarily visible from the exterior. The WLAN unit 401 is configured to be capable of data (packet) communication in a WLAN system compliant with the IEEE 802.11 standard series (IEEE 802.11a/b/g/n/ac/ax/be and the like), for example. The WLAN unit 401 is also capable of communicating as an STA that supports multi-link communication. However, the configuration is not limited thereto, and the WLAN unit 401 may be capable of communication in a WLAN system compliant with another standard. This example assumes that the WLAN unit 401 is capable of communicating in both the 2.4 GHz and 5 GHz frequency bands. However, the WLAN unit 401 is not limited thereto, and may be capable of communicating in one or more frequency bands including the 2.4 GHz band, the 5 GHz band, and the 6 GHz band. The WLAN unit 401 is also assumed to be capable of communication based on WFD, communication using software AP mode, communication using wireless infrastructure communication mode, and the like. Operations performed in these modes will be described later.

### Configuration of Mobile Terminal Device

FIG. 4B illustrates an example of the configuration of the mobile terminal device 140. The mobile terminal device 140 includes a main unit 411 that performs main control of the device itself, and a WLAN unit 429 that performs WLAN communication, for example. The main unit 411 is simply a unit including function blocks other than the WLAN unit 429. The main unit 411 includes, for example, a CPU 412, a ROM 413, a RAM 414, an image memory 415, a data conversion unit 416, a telephone unit 417, a GPS 419, a camera unit 421, a non-volatile memory 422, a data storage unit 423, a speaker unit 424, and a power supply unit 425. Here, CPU is an acronym of "Central Processing Unit", ROM is an acronym of "Read Only Memory", RAM is an acronym of "Random Access Memory", and GPS is an acronym of "Global Positioning System". The mobile terminal device 140 also includes a display unit 420 and an operation unit 418. The function units in the main unit 411 are connected to each other by a system bus 628 managed by the CPU 412. Additionally, the main unit 411 and the WLAN unit 429 (the aforementioned WLAN unit 401) are connected, for example, by a dedicated bus 426.

The CPU 412 is a system control unit including at least one processor, and controls the mobile terminal device 140 as a whole. The processing by the mobile terminal device 140 described below is implemented by the CPU 412 executing programs stored in the ROM 413, for example. Note that dedicated hardware for each type of processing may be provided. The ROM 413 stores control programs executed by the CPU 412, embedded operating system (OS) programs, and the like. In the present embodiment, the CPU 412 performs software control such as scheduling, task switching, and the like by executing each control program stored in the ROM 413 under the management of an embedded OS, which is also stored in the ROM 413.

The RAM 414 is constituted by a Static RAM (SRAM) or the like. The RAM 414 stores data such as program control variables, data such as setting values registered by the user and management data of the mobile terminal device 140, and the like. In addition, the RAM 414 can be used as various types of working buffers. The image memory 415 is constituted by a memory such as a Dynamic RAM (DRAM) or the like. The image memory 415 temporarily stores image data received through the WLAN unit 429, image data read out from the data storage unit 423, and the like for processing by the CPU 412. The non-volatile memory 422 is constituted by a memory such as a flash memory, for example, and continues to store data even when the mobile terminal device 140 is turned off. Note that the memory configuration of the mobile terminal device 140 is not limited to the configuration described above. For example, the image memory 415 and the RAM 414 may be implemented by the same memory, data may be backed up using the data storage unit 423, or the like. Additionally, although the present embodiment describes a DRAM as an example of the image memory 415, another storage medium such as a hard disk, a non-volatile memory, or the like may be used instead.

The data conversion unit 416 analyzes data in various formats, performs data conversion such as color conversion and image conversion, and the like. The telephone unit 417 controls a telephone line, and implements telephone communication by processing audio data input and output through the speaker unit 424. The GPS 419 receives radio waves transmitted from a satellite and obtains location information such as the current latitude, longitude, and the like of the mobile terminal device 140.

The camera unit 421 has a function for electronically recording and encoding an image input through a lens. The image data captured by the camera unit 421 is stored in the data storage unit 423. The speaker unit 424 performs control for implementing a function for inputting or outputting audio for the telephone function, other functions such as alarm notifications, and the like. The power supply unit 425 is a portable battery, for example, and controls the supply of power to the interior of the device. Power states include, for example, a "battery depleted state" in which there is no power remaining in the battery, a "power off state" in which the power key 404 has not been pressed, an "operating state" in which the battery is running normally, and a "power-saving state" in which the battery is operating but is in a power-saving state.

The display unit 420 is the display unit 402 described with reference to FIG. 4A, and displays various types of input operations, the operating state and status of the MFP 120, and the like under the control of the CPU 412. The operation unit 418 is the operation unit 403 described with reference to FIG. 4A, and when a user operation is accepted, performs control such as generating an electrical signal corresponding to the operation, outputting the electrical signal to the CPU 412, and the like.

The mobile terminal device 140 performs wireless communication using the WLAN unit 429, and performs data communication with other devices such as the MFP 120. The WLAN unit 429 converts data into packets and sends the packets to other devices. The WLAN unit 429 also restores packets from other external devices into the original data and outputs the data to the CPU 412. The WLAN unit 429 is a unit for implementing communication compliant with each WLAN standard. The WLAN unit 429 can operate in at least two communication modes simultaneously, including wireless infrastructure communication mode and P2P (WLAN) mode. Note that the frequency bands used in these communication modes can be limited by the functions and capabilities of the hardware.

### Configuration of Access Point

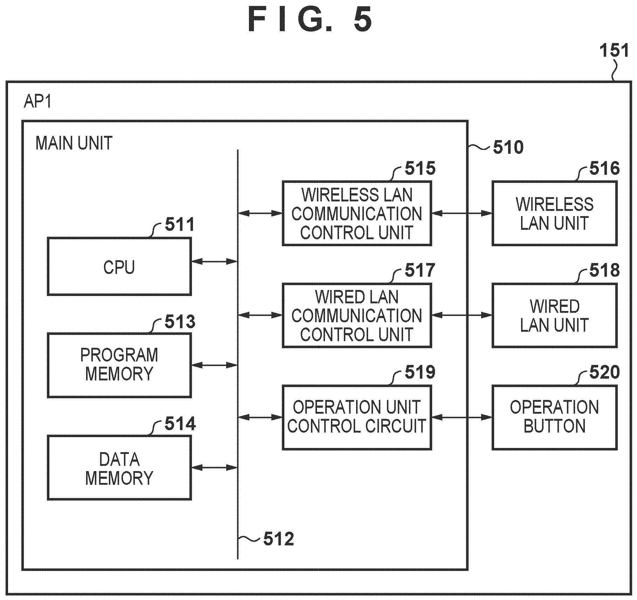

FIG. 5 is a block diagram illustrating the configuration of the AP 151 having a wireless LAN access point function. A main unit 510, which controls the AP 151, is configured including a wireless LAN unit 516, a wired LAN unit 518, and an operation button 520. The main unit 510 is simply a unit including function blocks other than the wireless LAN unit 516, the wired LAN unit 518, and the operation button 520.

A microprocessor-type CPU 511 disposed in the main unit 510 operates in accordance with a control program stored in a ROM-type program memory 513 and data in a RAM-type data memory 514, which are connected to the CPU 511 by an internal bus 512. The CPU 511 communicates with other communication terminal devices over a wireless LAN by controlling the wireless LAN unit 516 through a wireless LAN communication control unit 515. Specifically, the wireless LAN unit 516 is configured to be capable of data (packet) communication in a WLAN system compliant with the IEEE 802.11 standard series (IEEE 802.11a/b/g/n/ac/ax/be and the like), for example, as wireless LAN communication. The wireless LAN unit 516 is also capable of communicating as an AP that supports multi-link communication. However, the configuration is not limited thereto, and the WLAN unit 516 may be capable of communication in a WLAN system compliant with another standard. This example assumes that the WLAN unit 516 is capable of communicating in the 2.4 GHz, 5 GHz, and 6 GHz frequency bands. However, the WLAN unit 516 is not limited thereto, and may be capable of communicating in one or more frequency bands including the 2.4 GHz band, the 5 GHz band, and the 6 GHz band. The wireless LAN communication control unit 515 also performs interference wave detection processing when communicating wirelessly in a band in which Dynamic Frequency Selection (DFS) is implemented. When communicating wirelessly in a band in which DFS is implemented, the wireless LAN communication control unit 515 performs processing for changing the channel used when interference waves are detected, when it is necessary to immediately change to a free channel, and the like.

The CPU 511 also communicates with other communication terminal devices over a wired LAN by controlling the wired LAN unit 518 through a wired LAN communication control unit 517. The CPU 511 is capable of accepting operations made by a user manipulating the operation button 520, by controlling an operation unit control circuit 519. The CPU 511 includes at least one processor. The WLAN unit 401 is also assumed to be capable of communication based on WFD, communication using software AP mode, communication using wireless infrastructure communication mode, and the like. Operations performed in these modes will be described later.

Note that the AP 152 and the AP 153 have the same configuration as the AP 151.

### Direct Connection Method

"Direct connection" refers to a form in which devices connect directly to each other (i.e., peer-to-peer) wirelessly, without going through an external device such as the AP 151, the AP 152, or the AP 153. The MFP 120 can operate in a mode for communicating over a direct connection (a "direct communication mode") as one connection mode. Wi-Fi communication includes a plurality of modes for communicating over a direct connection, such as software AP mode, Wi-Fi Direct (registered trademark) mode, and the like. Wi-Fi Direct will be referred to as "WFD" hereinafter.

A mode, among the direct communication modes, in which communication is performed by establishing a direct connection through WFD is called "WFD mode". WFD is a standard developed by the Wi-Fi Alliance and is included in the IEEE 802.11 series communication standard. In WFD mode, a device to serve as a communication partner is searched for using device search information, after which the roles of P2P group owner (GO) and P2P client are determined, and the remaining wireless connection processing is performed. "Group owner" corresponds to the parent station (parent device) in Wi-Fi, and the client corresponds to a child station (child device) in Wi-Fi. This role determination corresponds to GO Negotiation in P2P, for example. In WFD mode, the MFP 120 is neither the parent station nor the child station before the roles have been determined. Specifically, one device among the devices that are to communicate issues the device search information, and searches for a device to connect to in WFD mode. When the other device, which is to serve as the communication partner, is discovered, the devices confirm information pertaining to the services and functions those respective devices can supply. Note that the confirmation of the device supply information is optional, and is not required. The device supply information confirmation phase corresponds to Provision Discovery in P2P, for example. Next, which device will serve as the P2P client and which will serve as the P2P group owner is determined by confirming this device supply information with each other. Once the client and the group owner have been determined, the devices exchange parameters for communicating through WFD. The remaining wireless connections and IP connections are processed between the P2P client and group owner on the basis of the exchanged parameters. Note that in WFD mode, the MFP 120 may skip the GO Negotiation described above, and the MFP 120 may always operate as the GO. In other words, the MFP 120 may operate in Autonomous GO mode, which is a WFD mode. A state in which the MFP 120 is operating in WFD mode is a state in which, for example, a connection through WFD is not established but the MFP 120 is operating as the GO, a connection through WFD is established and the MFP 120 is operating as the GO, or the like. Additionally, when the MFP 120 operates as the GO, the MFP 120 also determines the frequency band and the frequency channel as the parent station. Accordingly, the MFP 120 can select which frequency band to use from 2.4 GHz, 5 GHz, or 6 GHz, as well as which frequency channel to use in that frequency band.

A mode, among the direct communication modes, that communicates by establishing a direct connection using a software AP according to the IEEE 802.11 standard is called a "software AP mode". Software AP mode is a mode that does not use Wi-Fi Direct (registered trademark), and is different from the WFD mode. In software AP mode, among the communicating devices (e.g., the mobile terminal device 140 and the MFP 120), one of the devices (e.g., the mobile terminal device 140) functions as a client that has a role of requesting various types of services. The other device provides a Wi-Fi access point function through software settings. The software AP corresponds to the parent station in Wi-Fi, and the client corresponds to the child station in Wi-Fi. In software AP mode, the client uses the device search information to search for a device that will serve as a software AP. Once a software AP is discovered, the remaining wireless connection processing (the establishment of a wireless connection and the like) is performed between the client and the software AP, after which IP connection processing (IP address allocation and the like) is performed. Note that commands, parameters, and the like sent and received when establishing a wireless connection between the client and the software AP may be any specified by the Wi-Fi standard, and will therefore not be described here. The MFP 120 operating in software AP mode also determines a usable frequency band and frequency channel as a parent station. Accordingly, the MFP 120 can select which frequency band to use from 2.4 GHz, 5 GHz, or 6 GHz, as well as which frequency channel to use in that frequency band.

In the present embodiment, when establishing and maintaining a direct connection, the MFP 120 operates as the parent station in the network to which the MFP 120 belongs. Note that "parent station" refers to a device that constructs a wireless network, and is a device that provides child stations with the parameters used to connect to the wireless network. The parameters used to connect to the wireless network are parameters pertaining to a channel used by the parent station, for example. By receiving these parameters, a child station connects to the wireless network constructed by the parent station using the channel used by the parent station. In direct communication mode, the MFP 120 operates as the parent station, and the MFP 120 can therefore determine which frequency band and which channel to use in the communication performed in direct communication mode. In the present embodiment, the MFP 120 is assumed to use a channel corresponding to the 2.4 GHz frequency band and a channel corresponding to the 5 GHz frequency band in the communication performed in direct communication mode. The user can then set the frequency band to be used (i.e., the frequency band channel to be used) as desired by making a setting in the screen displayed by the MFP 120. However, the present embodiment assumes that even if 5 GHz is selected in the screen displayed by the MFP 120, the MFP 120 will not use a channel corresponding to a Dynamic Frequency Selection (DFS) band in the 5 GHz frequency band for the communication performed in direct communication mode. In other words, the MFP 120 is assumed to use only channels corresponding to frequency bands outside the DFS band in the 5 GHz frequency band for the communication performed in direct communication mode. If, when using a channel corresponding to the DFS band, a radar wave is detected in the frequency band corresponding to that channel, it is necessary to change the channel currently being used. A frequency band in which the channel may be changed in response to a radar wave being detected is called a "DFS band". Note, however, that it may be possible to use a channel corresponding to the DFS band among the 5 GHz frequency band for communication performed in direct communication mode when, for example, using a wireless chip that supports the DFS function.

In the present embodiment, the MFP 120 can receive print jobs, scan jobs, and the like from the mobile terminal device 140 over a direct connection between the MFP 120 and the mobile terminal device 140 operating in direct connection mode. Here, a "print job" is a job for causing the MFP 120 to print an image selected as desired by the user on the mobile terminal device 140. A "scan job" is a job for causing the MFP 120 to scan a document set in the MFP 120, and is a job for the mobile terminal device 140 to obtain an image obtained by the scanning. The image obtained by the scanning is also communicated over a direct connection between the MFP 120 and the mobile terminal device 140 operating in direct connection mode.

### Infrastructure Connection Method

"Infrastructure connection" is a type of connection for devices (e.g., the mobile terminal device 140 and the MFP 120) which are to communicate to connect to an access point (e.g., the AP 151) overseeing the network of those devices and communicate with each other via the access point. The MFP 120 is also capable of operating in a mode for communicating over an infrastructure connection (infrastructure communication mode) as one communication mode. In particular, a connection type in which a connection is made with an access point wirelessly will be called a "wireless infrastructure connection", and an infrastructure communication mode for connecting to an access point through a wireless infrastructure connection will be called a "wireless infrastructure communication mode".

In a wireless infrastructure connection, each device uses device search information to search for an access point. Once an access point is discovered, the remaining wireless connection processing (the establishment of a wireless connection and the like) is performed between the devices and the access point, after which IP connection processing (IP address allocation and the like) is performed. Note that commands, parameters, and the like sent and received when establishing a wireless connection between the devices and the access point may be any specified by the Wi-Fi standard, and will therefore not be described here.

In the present embodiment, when the MFP 120 operates in wireless infrastructure communication mode, the AP 151 operates as the parent station, and the MFP 120 operates as a child device. In other words, in the present embodiment, "wireless infrastructure connection" refers to a connection between the MFP 120, which operates as a child device, and a device operating as a parent device. When the MFP 120 has established a wireless infrastructure connection and the mobile terminal device 140 has also established a wireless infrastructure connection with the AP 151, the MFP 120 and the mobile terminal device 140 can communicate via the AP 151. The channel used for communication in the wireless infrastructure connection is determined by the AP 151, and thus the MFP 120 communicates over the wireless infrastructure connection using the channel determined by the AP 151. In the present embodiment, the MFP 120 is assumed to use a channel corresponding to the 2.4 GHz frequency band and a channel corresponding to the 5 GHz frequency band in the communication performed in the wireless infrastructure connection. Note that the MFP 120 can also use a channel corresponding to the DFS band and the 5 GHz frequency band in the communication performed in the wireless infrastructure connection. Note also that to communicate with the MFP 120 via the AP 151, it is necessary for the mobile terminal device 140 to recognize that the MFP 120 belongs to the network formed by the AP 151 and to which the mobile terminal device 140 belongs. Additionally, when the mobile terminal device 140 and the MFP 120 are connected to the AP 151 through a wireless infrastructure connection, the MFP 120 can be discovered through a broadcast made by the mobile terminal device 140. The processing executed in the wireless infrastructure connection between (i) the mobile terminal device 140 and (ii) the AP 152, the AP 153, and the like is the same as the processing executed in the wireless infrastructure connection between the mobile terminal device 140 and the AP 151.

### Connection Setting Mode (Network Setup Mode)

The MFP 120 can operate in a connection setting mode. The trigger for the MFP 120 to start operating in connection setting mode may be, for example, a user pressing a connection setting mode button, or the MFP 120 being started (powered on) for the first time after being shipped. The connection setting mode button may be a physical button included in the MFP 120, or may be a software button displayed by the MFP 120 in a display unit 161.

When the MFP 120 starts operating in connection setting mode, Wi-Fi communication is enabled. Specifically, the MFP 120 enables an internal AP (a setup AP) of the MFP 120, which is specifically for connection setting mode, as processing for enabling Wi-Fi communication. This enables the MFP 120 to establish a direct connection with the mobile terminal device 140 using Wi-Fi. Connection information (an SSID, a password, or the like) for connecting to the setup AP is assumed to be held in advance in a setup app installed in the mobile terminal device 140, and the mobile terminal device 140 is assumed to have recognized the connection information for connecting to the setup AP. Note that an encryption mode need not be set for the setup AP, and thus a password may be unnecessary for connecting to the AP. Accordingly, it is assumed that the AP enabled in the direct communication mode and the setup AP are different APs. Furthermore, unlike the connection information of the AP enabled in the direct communication mode, it is assumed that the connection information for connecting to the setup AP cannot be changed by the user as desired. When the MFP 120 operating in connection setting mode and the mobile terminal device 140 are connected, the mobile terminal device 140 sends a setting command for setting the communication mode of the MFP 120 to the MFP 120 through the setup app. The setting command is, for example, a command for operating the MFP 120 in the wireless infrastructure communication mode, and more specifically, is information including connection information (an SSID, a password, or the like) for connecting to the AP 151. The command for operating the MFP 120 in the wireless infrastructure communication mode is called an "infrastructure setting command". When the infrastructure setting command is received, the MFP 120 stops operating in connection setting mode, starts operating in wireless infrastructure communication mode, and connects to the AP 151 using the information included in the infrastructure setting command. The setting command is, for example, a command for operating the MFP 120 in direct communication mode. The command for operating the MFP 120 in direct communication mode is called a "direct setting command". When the direct setting command is received, the MFP 120 transmits direct connection information for connecting to the MFP 120 operating in direct communication mode to the mobile terminal device 140. Operation in connection setting mode is stopped, and the operation in the direct communication mode is started. Then, when the MFP 120 receives a connection request that is based on direct connection information from the mobile terminal device 140, a direct connection between the MFP 120 operating in direct communication mode and the mobile terminal device 140 is established.

Note that in connection setting mode, the MFP 120 may connect to the mobile terminal device 140 using Wi-Fi Direct (WFD) instead of normal Wi-Fi. In other words, the MFP 120 may operate as the Group Owner and receive setting commands from the mobile terminal device 140 through communication using WFD. Additionally, the MFP 120 operating in connection setting mode is assumed to use a predetermined communication protocol (a setup communication protocol) in the communication with the mobile terminal device 140 connected to the setup AP. Specifically, the setup communication protocol is Simple Network Management Protocol (SNMP), for example. Hypertext Transfer Protocol (HTTP), Device Provisioning Protocol (DPP), and the like can also be given as other specific examples of the setup communication protocol. Once a predetermined amount of time has passed after the MFP 120 starts operating in connection setting mode, the MFP 120 stops operating in connection setting mode and disables the setup AP. This is because the setup AP is an access point that does not require a password as described above, and thus if the setup AP is enabled for a long time, it is more likely that a connection will be requested from an inappropriate device.

In the present embodiment, the MFP 120 is assumed to be capable of receiving setting commands from the mobile terminal device 140, but incapable of receiving print jobs, scan jobs, and the like, over a direct connection between the MFP 120 operating in connection setting mode and the mobile terminal device 140. Alternatively, the MFP 120 operating in connection setting mode is assumed not to execute printing, scanning, or the like, even if a print job, a scanning job, or the like is received from the mobile terminal device 140. This is because connection setting mode is a mode for setting the communication mode, rather than a mode for executing printing, scanning, or the like.

### Multi-Link Communication

Multi-Link communication is a function that enables multiple links to be used simultaneously in a wireless LAN, which is under consideration in the IEEE 802.11be standard. Specifically, throughput can be improved by establishing a plurality of links between the STA and the access point over a plurality of different frequency channels, and communicating over two or more links in parallel.

Thus far, the STA in IEEE 802.11 has connected to an access point (AP) and communicated data with the access point over a single link. In the IEEE 802.11be standard, a communication device can improve throughput by connecting to an access point and communicating data over at least two links at the same time. Such data communication performed over two or more links at the same time is referred to as multi-link communication. Support for the 6 GHz band is also being considered in order to expand the frequency bands available in the IEEE 802.11be standard. Note that two or more links may be selected from the same frequency band (one of the sub-GHz band, the 2.4 GHz band, the 3.6 GHz band, the 4.9 and 5 GHz bands, the 6 GHz band, and the 60 GHz band), or from different frequency bands. The AP corresponding to one device performing multi-link communication and the STA corresponding to one device each includes a plurality of virtual APs and a plurality of virtual STAs. For this reason, the AP corresponding to one device and the STA corresponding to one device are also referred to as an "AP multi-link device" (AP MLD) and an "STA multi-link device" (STA MLD), respectively. The STA MLD is sometimes referred to as a "non-AP MLD". The AP MLD and the STA MLD may also be called "communication devices". The virtual APs and virtual STAs are called "affiliated APs" and "affiliated STAs". The plurality of affiliated APs included in an AP MLD are APs that communicate using different channels. Likewise, the plurality of affiliated STAs included in an STA MLD are STAs that communicate using different channels.

Processing by which the STA MLD performs multi-link communication with the AP will be described. The STA MLD determines whether to connect over a multi-link on the basis of the Basic Multi-Link element included in a frame received from the AP. The AP MLD sends a Basic Multi-Link element on a frame such as a Beacon frame or a Probe Response frame.

The STA MLD confirms whether a Basic Multi-Link element is included in a frame, such as a Beacon frame or a Probe Response frame, received from a given affiliated AP. The STA MLD then determines whether the AP that sent the frame is an AP MLD.

If the counterpart AP is an AP MLD, the STA MLD obtains information of the affiliated AP from a Reduced Neighbor Report (RNR) element included in the received frame such as a Beacon frame or Probe Response frame. The affiliated AP is an AP with an MLD ID of 0, indicating that the AP belongs to the same AP MLD. The information on the affiliated AP is, for example, frequency band information, channel information, and the like of the affiliated AP.

On the basis of the obtained information of the affiliated AP, the STA MLD switches channels and obtains information for connecting to each affiliated AP. On the basis of the obtained information, the STA MLD then connects with the affiliated AP to be connected to over a multi-link.

The STA MLD connects over a single frequency channel if, for example, the counterpart AP is not an AP MLD.

The IEEE 802.11 series standard defines the bandwidth of each frequency channel as 20 MHz. Here, "frequency channel" refers to a frequency channel defined in the IEEE 802.11 series standard, and in the IEEE 802.11 series standard, multiple frequency channels are defined in each of the 2.4 GHz, 5 GHz, 6 GHz, and 60 GHz frequency bands. Accordingly, the plurality of affiliated APs and the plurality of affiliated STAs use one of the frequency channels mentioned above. By bonding to an adjacent frequency channel, a bandwidth of 40 MHz or more may be used in a single frequency channel. For example, the AP 151 can establish a link A and communicate with the mobile terminal device 140 over a first frequency channel in the 5 GHz band. In parallel with this, the mobile terminal device 140 and the MFP 120 can establish a link B and communicate with the AP 152 over a second frequency channel in the 6 GHz band. In this case, the mobile terminal device 140 and the MFP 120 perform multi-link communication to maintain link B over the second frequency channel in parallel with link A over the first frequency channel. In the following, when the AP 151, the mobile terminal device 140, and the MFP 120 support multi-link communication, the AP 151 will be referred to as the "AP MLD 151", and the mobile terminal device 140 and the MFP 120 as the "STA MLD 140" and the "STA MLD 120", to distinguish those devices from the individual APs and STAs included therein.

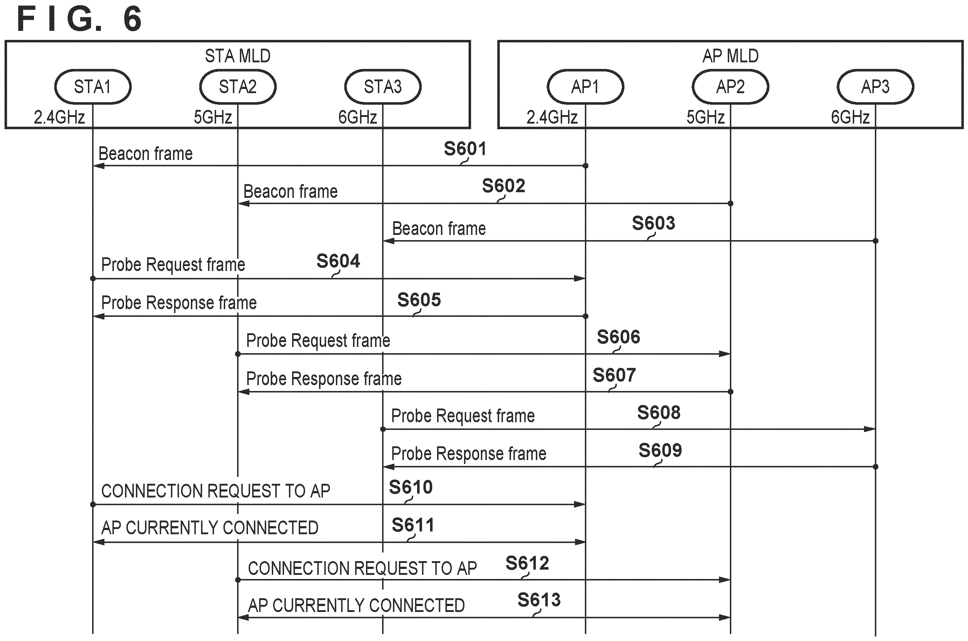

FIG. 6 is a sequence chart illustrating the AP MLD and the STA MLD performing multi-link communication. In FIG. 6, the affiliated APs are indicated using appended numbers, e.g., AP 1, AP 2, and so on, and likewise with the affiliated STAs, e.g., STA 1, STA 2, and so on. In other words, in FIG. 6, for example, the AP MLD 151 includes the AP 1, which is a first AP; the AP 2, which is a second AP; and the AP 3, which is a third AP. The STA MLD 140 and the STA MLD 120 each includes an STA 1, which is a first STA; an STA 2, which is a second STA; and an STA 3, which is a third STA. The AP 1 and the STA 1 establish a first link using the first frequency channel. The AP 2 and the STA 2 establish a second link using the second frequency channel. The AP 3 and the STA 3 establish a third link using a third frequency channel. In the present embodiment, the connection between the affiliated STA and the affiliated AP is referred to as a "link". The first frequency channel to the third frequency channel are in the 2.4 GHz band, the 5 GHz band, and the 6 GHz band, respectively, in the example illustrated in FIG. 6, but may be in other available frequency bands instead. In this case, the number of APs included in the AP MLD is not limited to three, and may be a number based on the available frequency bands. The same applies to the STA MLD as well. As described above, an AP associated with a respective frequency band in which data communication can be performed is referred to as an "affiliated AP", and an STA associated with a respective frequency band in which data communication can be performed is referred to as an "affiliated STA". For example, the affiliated AP and the affiliated STA may be set in advance by a user such as an administrator from among the APs of the AP MLD 151, the STAs of the STA MLD 140 and the STA MLD 120, and the like. Processing executed by each device in this sequence is implemented by the CPU of each device reading out various programs stored in a memory provided in that device, such as a ROM or the like, into a RAM and executing those programs. In the following descriptions, the STA MLD is, for example, the STA MLD 140 or the STA MLD 120, and the AP MLD is, for example, the AP MLD 151.

In the initial state of the processing illustrated in FIG. 6, the STA MLD starts establishing a connection with the AP MLD in wireless infrastructure communication mode. Although a case where the establishment of the connection between the STA MLD and the AP 1 is started will be described here as an example, the establishment of a connection with the AP 2, the AP 3, or the like may be started.

When the STA MLD and the AP 1 connect in wireless infrastructure communication mode, the AP 1 obtains information from the STA MLD as to whether the STA MLD supports the IEEE 802.11be standard. It is assumed that the following processing is then performed when the AP 1 has successfully obtained information indicating that the STA MLD supports the IEEE 802.11be standard.

In steps S601 to S603, each of the STAs 1 to 3 of the STA MLD receives a Beacon frame sent from each of the APs 1 to 3 of the AP MLD. For example, the STA MLD detects the presence of a network formed by the AP MLD for devices around the AP MLD by receiving a Beacon frame sent periodically from each of the APs 1 to 3 of the AP MLD.

Note that the processing of steps S601 to S603 may be performed at different timings, or at the same timing.

In step S604, the STA 1 of the STA MLD sends a Probe Request frame to the AP MLD. The Probe Request frame is, for example, a frame that requests AP information from an AP MLD, and is also a frame for searching for an AP. The AP information is, for example, information for connecting to the AP MLD. In step S605, the STA 1 of the STA MLD receives a Probe Response frame from the AP MLD. The Probe Response frame is, for example, a frame of a response to the Probe Request frame, and may include the AP information or the like, for example.

In steps S606 and S607, the same processing as that performed in steps S604 and S605 is performed between the STA 2 and the AP MLD. Likewise, in steps S608 and S609, the same processing as that performed in steps S604 and S605 is performed between the STA 3 and the AP MLD.

In step S610, the STA 1 sends a connection request to the AP 1 using, for example, the AP information included in the received Beacon frame, Probe Request frame, or the like. In step S611, communication between the STA 1 and the AP 1 is established. In other words, the STA 1 is connected, as a child station, to the AP 1, which serves as a parent station. In step S612, the STA 2 sends a connection request to the AP 2. In step S613, communication between the STA 2 and the AP 2 is established.

Note that the STA MLD confirms whether the received Beacon frame, Probe Response frame, or the like includes information indicating that the AP corresponds to the AP MLD. The information indicating that the AP corresponds to the AP MLD is, for example, a Basic Multi-Link element.

If the counterpart AP is an AP MLD, the STA MLD obtains, from the RNR element included in the received frame, AP information such as the frequency band, channel information, and the like of other affiliated APs belonging to the same AP MLD. The STA MLD determines whether the AP is another affiliated AP belonging to the same AP MLD by determining whether the MLD ID included in the RNR element is 0.

In this manner, on the basis of the AP information obtained from the AP MLD, the STA MLD connects with the affiliated AP to be connected to over a multi-link. In other words, the STA MLD establishes a link with the AP MLD over a plurality of frequency channels. This makes it possible for the STA MLD to improve the throughput in communication with the AP MLD.

Note that a plurality of links in different frequency bands may be established between each communication device in the multi-link communication. For example, in addition to the link in the 5 GHz band and the link in the 6 GHz band, the AP MLD and the STA (MFP 120) may establish the third link in the 2.4 GHz band. Alternatively, links may be established over a plurality of different channels included in the same frequency band. For example, the first link may be established on channel 15 in the 6 GHz band, and the second link may be established on channel 207 in the 6 GHz band. Note that the links in the same frequency band and links in different frequency bands may be intermixed as well. For example, in addition to a link on channel 36 in the 5 GHz band, the AP MLD and the STA (MFP 120) may establish a link on channel 149 in the 5 GHz band and a link on channel 15 in the 6 GHz band. By establishing a plurality of connections with the AP MLD on different frequencies, when a given band is congested, the STA MLD can establish communication with the AP MLD in another band that is not congested. This makes it possible for the STA MLD to prevent a drop in throughput, communication latency, and the like in the communication with the AP MLD.

Although FIG. 6 illustrates the APs 1 to 3 (APs 151 to 153) as an example of the AP MLD, the AP MLD may be any AP that supports multi-link communication, and may be, for example, the MFP 120. Additionally, although FIG. 6 illustrates the MFP 120 as an example of the STA, the STA may be any STA that supports multi-link communication, and may be, for example, the mobile terminal device 140.

Such multi-link communication makes it possible to achieve better communication throughput than when communicating on a single frequency channel. However, as the overhead in exchanging information for performing multi-link communication increases, so too does the power consumption of the electronic device.

Incidentally, there are cases where, depending on the wireless interface of the electronic device such as the MFP 120, multi-link communication is not supported, or multi-link communication is supported but is limited by user settings or the like. Furthermore, in electronic devices, there are communication situations that require communication with high communication throughput, such as multi-link communication, and communication situations where such throughput is not as critical.

Accordingly, there is a need for a configuration that dynamically switches whether the electronic device performs multi-link communication, without requiring user operations, according to the state of the electronic device such as the MFP 120, the communication situation, and the like. In other words, it is necessary to improve the usability of a wireless connection for an electronic device capable of using a plurality of links simultaneously.

In the present embodiment, the MFP 120 serving as an electronic device can be connected, as a child station, to an external access point serving as a parent station, and can also be started as a parent station. When operating as a child station, the MFP 120 controls whether multi-link communication is enabled on the basis of a first condition for performing the communication between the MFP 120 and the external access point through multi-link communication. In addition, when starting as a parent station, the MFP 120 controls whether multi-link communication is enabled when starting as a parent station on the basis of a second condition for communicating through multi-link communication. Such a configuration makes it possible to dynamically switch whether the MFP 120 performs multi-link communication without requiring user operations. It is therefore possible to improve the usability of a wireless connection for an electronic device capable of using a plurality of links simultaneously.

Operations according to the present embodiment, related to switching between enabling and disabling multi-link communication and performed in conjunction with a change in the network settings of the MFP 120, will be described next.

In the following descriptions, the MFP 120 and the AP 1 (the AP 151) support multi-link communication according to the IEEE 802.11be standard.

The MFP 120 is capable of communicating as an STA that supports multi-link communication, and the AP 1 (the AP 151) is capable of communicating as an AP that supports multi-link communication.

Note that the present embodiment will describe a case where the wireless unit 226 of the MFP 120, for example, does not support processing compliant with IEEE 802.11be (multi-link communication) when operating as a parent station due to the capabilities of the wireless unit 226.

In other words, in the present embodiment, the following processing will be described using, as an example, an MFP 120 in which the STA operating as a child station supports multi-link communication but the STA operating as a parent station does not support multi-link communication.

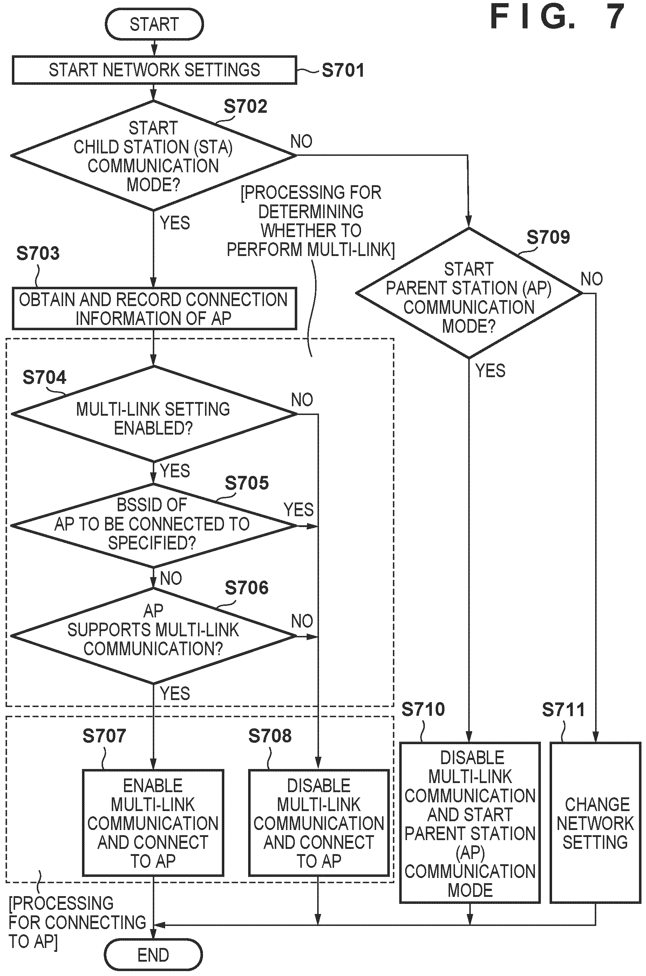

Processing for determining whether the MFP 120 is to perform multi-link communication in accordance with the state of the MFP 120 will be described next with reference to FIG. 7. FIG. 7 is a flowchart illustrating processing executed by the MFP 120. In this flow, the processing performed by the MFP 120 is implemented by the CPU 212 reading out various programs stored in a memory such as the ROM 213 of the MFP 120 into the RAM 214 and executing those programs.

In step S701, the MFP 120 starts network settings. Specifically, for example, the MFP 120 receives a request to start the network settings. In other words, the MFP 120 accepts an instruction to start the network settings. This processing is started, for example, on the basis of the MFP 120 accepting a user operation, including an operation for selecting "Wireless LAN Setup" in FIG. 3D, an operation for selecting "Set up with password" in FIG. 3E, or the like. The user operation is a user operation for enabling wireless infrastructure connection mode, and will be called an "infrastructure connection user operation". This processing is also started, for example, on the basis of the MFP 120 accepting a user operation for enabling direct communication mode. This user operation will be called a "direct connection user operation". The direct connection user operation includes an operation for selecting the "Wireless Direct" item in FIG. 3C, an operation for selecting the "Enable/Disable Wireless Direct" item in FIG. 3F, and the like. The direct connection user operation also includes a user operation for selecting an interface for making settings to enable direct communication mode in a screen displayed after the "Enable/Disable Wireless Direct" item has been selected. This processing is also started, for example, on the basis of the MFP 120 accepting a user operation in the screen illustrated in FIG. 3F, including an operation for changing the Wireless Direct SSID, an operation for changing the Wireless Direct password, or the like. This user operation is a user operation for changing settings pertaining to direct communication mode, and will be called a "changing user operation". This processing is also started, for example, on the basis of the MFP 120 accepting a user operation for enabling connection setting mode. This user operation will be called a "connection setting user operation". The connection setting user operation includes, for example, an operation for selecting the "Wireless LAN Setup" item in FIG. 3D, an operation for selecting "Set up using PC/smartphone" in FIG. 3E, and the like. This processing is also started, for example, on the basis of the MFP 120 accepting a user operation for turning the MFP 120 on in a state where a communication mode is not set in the MFP 120. This user operation is different from the connection setting user operation, but is a user operation for enabling connection setting mode. This user operation is an operation for starting the initial setup of the MFP 120 after the MFP 120 has been received. This user operation will therefore be called an "initial setup user operation". In other words, an instruction to start the network settings corresponds to the user operations described above, for example. However, the configuration is not limited thereto, and the processing may be started, for example, on the basis of the MFP 120 operating in connection setting mode receiving a setting command from the mobile terminal device 140. In other words, the request to start the network settings may be a setting command.

In step S702, the MFP 120 determines whether to start a communication mode operating as a child station (STA) in the network settings. If the MFP 120 determines to start the communication mode operating as a child station (STA), the sequence moves to step S703. However, if the MFP 120 determines not to start the communication mode operating as a child station (STA), the sequence moves to step S709. The communication mode in which the MFP operates as a child station (STA) is, for example, wireless infrastructure communication mode. On the other hand, the communication modes in which the MFP operates as a parent station (AP) are, for example, software AP mode, WFD mode, and connection setting mode.

Specifically, in step S702, for example, the MFP 120 determines whether to start a communication mode operating as a child station (STA) in the network settings on the basis of the instruction to start the network settings received in step S701.

In other words, when the network settings have been started on the basis of, for example, accepting an infrastructure connection user operation, a determination of "yes" is made in this step. Additionally, for example, when the network settings have been started on the basis of the infrastructure setting command being received, a determination of "yes" is made in this step. Additionally, for example, when the network settings have been started on the basis of accepting a direct connection user operation, a changing user operation, a connection setting user operation, or an initial setup user operation, a determination of "no" is made in this step. Additionally, for example, when the network settings have been started on the basis of the direct setting command being received, a determination of "no" is made in this step.

In step S703, the MFP 120 obtains AP information necessary for the wireless infrastructure communication mode settings. The AP information is information necessary for the MFP 120 to join a network formed by an external AP.

If the network settings have been started on the basis of accepting an infrastructure connection user operation, in step S703, for example, the MFP 120 obtains the AP information by searching for an AP. Specifically, the MFP 120 starts searching for an AP by sending a device search request (Probe Request frame) to APs around the MFP 120. Then, the MFP 120 searches out and discovers the AP by receiving a device search response (Probe Response frame) from the AP, information sent spontaneously by the AP at regular intervals (a Beacon frame), or the like. The AP information obtained by the MFP 120 from the AP includes, for example, at least one of information indicating the SSID, radio wave strength, frequency band, BSSID (Media Access Control (MAC)) address, authentication mode, encryption mode, and communication standard of the AP, information pertaining to multi-link communication, and the like. The information pertaining to multi-link communication includes, for example, information as to whether the AP supports multi-link communication (a Basic Multi-Link element), information on the affiliated AP (frequency band and channel information of the affiliated AP), and the like. The content of the AP information obtained by the MFP 120 from the AP varies depending on the AP model, model number, settings, and the like.

Note that in step S703, the MFP 120 may exclude the AP information of the AP from the search results if the obtained AP information includes an AP having a security mode (authentication mode or encryption mode) not supported by the MFP 120. The AP information of the AP may also be excluded from the search results if the security mode corresponding to the AP is only a security mode not supported and/or restricted by the MFP 120. A "restricted" security mode is a security mode having a lower security strength than, for example, a security mode set by the user.

Additionally, in step S703, after the AP search is complete, the MFP 120 displays a list of APs in the console unit 220 of the MFP 120. The MFP 120 accepts a user selection of the AP to be connected from the displayed list of APs. The MFP 120 also accepts the input of the password of the AP to be connected to, for which the selection has been accepted. For example, the MFP 120 may display an interface capable of accepting the input of the password of the AP to be connected to in the console unit 220.

Note that if the MFP 120 detects an AP having a plurality of MAC addresses (Basic Service Set Identifiers (BSSIDs)) having the same SSID (Extended Service Set Identifier (ESSID)) in the search for the AP, the APs having the same SSID (ESSID) may be displayed together.

Additionally, in step S703, if APs having the same SSID (ESSID) are selected by the user, the MFP 120 may accept an instruction to connect to an AP having specified a MAC address (BSSID), or connect to an AP without specifying a MAC address (BSSID). If the MFP 120 accepts an instruction to connect to an AP by specifying a MAC address (BSSID), the MFP 120 stores, as the AP information, information indicating that the AP to be connected has been specified.

Note that the AP information in step S703 may be obtained from the AP using a function called Wi-Fi Protected Setup ("WPS" hereinafter) (registered trademark). The AP information in step S703 may also be obtained from the AP using a function called Wi-Fi Easy Connect ("WEC" hereinafter) (registered trademark). Additionally, when the network settings have been started on the basis of the infrastructure setting command being received, the AP information in step S703 is included in the infrastructure setting command. Accordingly, the AP information may be obtained from the infrastructure setting command.

In step S703, the MFP 120 stores the obtained AP information in the RAM 214 and/or a non-volatile memory 215. The AP information stored in step S703 includes, for example, at least one of the SSID, BSSID (MAC address), password, security mode (authentication mode and/or encryption mode), frequency band, and channel, information pertaining to multi-link communication, and the radio wave strength.

Next, in steps S704 to S706, the MFP 120 determines whether to perform multi-link communication with the AP to be connected to (e.g., the AP 1 (the AP 151)). In other words, the determination is made based on a condition for performing the communication between the MFP 120 and the AP as communication based on the IEEE 802.11be communication standard, in which a plurality of communication links can be used simultaneously.

In step S704, the MFP 120 determines whether a setting for multi-link communication is enabled for when the wireless unit 226 is to be operated as a child station. If the MFP 120 determines that the setting is enabled, the sequence moves to step S705. However, if the MFP 120 determines that the setting is disabled, the sequence moves to step S708.

Specifically, in step S704, for example, the MFP 120 obtains information pertaining to the settings for enabling/disabling multi-link communication (called "setting information" hereinafter) stored in the RAM 214 and/or the non-volatile memory 215. In step S704, if the obtained setting information is information indicating that the setting is enabled, the MFP 120 moves the sequence to step S705. However, if the obtained setting information is information indicating that the setting is disabled, the MFP 120 moves the sequence to step S708. The setting information is stored, for example, on the basis of a user operation, such as changing the setting for enabling/disabling multi-link communication, by selecting the item "common settings" in FIG. 3C. Furthermore, in the present embodiment, the setting information is information on settings for when the MFP 120 operates as a child station. Note that the setting information may be stored by receiving a specific signal from an external device such as the mobile terminal device 140. Note also that the setting information is set to "enabled" by default. Accordingly, when a user operation in the MFP 120, such as changing the settings for enabling/disabling multi-link communication, has not been made, or when the specific signal has not been received from an external device such as the mobile terminal device 140, the setting information is information indicating that multi-link communication is enabled.

In step S705, the MFP 120 determines whether the BSSID of the AP to be connected to is specified. If the MFP 120 determines that the BSSID is specified, the sequence moves to step S708. However, if the MFP 120 determines that the BSSID is not specified, the sequence moves to step S707. Specifically, the MFP 120 refers to the AP information stored in step S703. If information indicating that the BSSID of the AP to be connected to is specified is stored, the MFP 120 moves the sequence to step S708. However, if information indicating that the BSSID of the AP to be connected to has been specified is not stored, the MFP 120 moves the sequence to step S706.

For example, when the BSSID of the AP to be connected to is specified by the user, a frequency band used in a connection between the MFP 120 and an external access point can be considered to have been specified. Accordingly, in step S705, if the BSSID of the AP to be connected to is determined to have been specified by the user, the MFP 120 moves to step S708 in order to disable multi-link communication. However, when the BSSID of the AP to be connected to is not specified by the user, a frequency band used in a connection between the MFP 120 and an external access point can be considered to not have been specified. Accordingly, the sequence moves to step S706 in order to further determine whether to enable multi-link communication.

In step S706, the MFP 120 determines whether the AP to be connected to supports multi-link communication. If the MFP 120 determines that multi-link communication is supported, the sequence moves to step S707. However, if the MFP 120 determines that multi-link communication is not supported, the sequence moves to step S708. Specifically, in step S706, for example, the MFP 120 refers to the AP information stored in step S703, and makes this determination on the basis of information indicating whether multi-link communication is supported.

In step S707, the MFP 120 enables multi-link communication and performs control for connecting, as a child station, to the AP to be connected to, which serves as a parent station. For example, the MFP 120 establishes a connection with the AP MLD to be connected to through multi-link communication, as described above with reference to FIG. 6.

Specifically, in step S707, the MFP 120 refers to the AP information obtained in step S703, and obtains, from the Basic Multi-Link element, frequency band information and channel information of an affiliated AP belonging to the AP MLD. The MFP 120 then performs multi-link communication with the AP to be connected to using the obtained frequency band information and channel information of the affiliated AP. A case where the MFP 120 has obtained the AP information from the AP 1 illustrated in FIG. 6 in step S703, obtains frequency band information and channel information of affiliated APs such as the AP 2 and the AP 3, and performs multi-link communication will be described in detail as an example.

For example, the Basic Multi-Link element, which is the AP information obtained by the MFP 120 in step S703, may also include information of another group of APs that do not belong to the AP MLD. Accordingly, when obtaining the frequency band information and channel information of the affiliated AP, the MFP 120 determines whether an AP other than the AP 1 is the affiliated AP using the RNR element included in the frame received from the AP 1. For example, an MLD ID is assigned to each AP in a group of affiliated APs included in the Basic Multi-Link element. This MLD ID being 0 indicates that the AP belongs to the AP MLD to which the affiliated APs belong. Accordingly, in step S707, the MFP 120 obtains, from the AP information stored in step S703, the information on the frequency band and channel of the affiliated AP (AP 2, AP 3) having an MLD ID of 0. Through this, the MFP 120 can ascertain the frequency bands and channels of the AP 2 and AP 3, other than the AP 1, operating as the AP MLD. Then, in step S707, the MFP 120 performs multi-link communication with the AP 1, AP 2, and AP 3 on the basis of the frequency band and channel information of the affiliated APs (AP 2, AP 3). In other words, the MFP 120 establishes a plurality of links with the AP MLD.

In step S708, the MFP 120 performs processing for connecting to the AP using a single frequency channel, without using multi-link communication. In other words, the MFP 120 performs control for disabling multi-link communication and connecting, as a child station, to the external AP serving as a parent station.

Note that in step S708, the MFP 120 connects to the AP having the highest communication quality on the basis of the AP information stored in step S703, when, for example, the BSSID to be connected to is not specified by the user (when a determination of "no" is made in step S704 or a determination of "no" is made in step S706). If the MAC address (BSSID) to be connected to is not specified by the user, the SSID selected by the user can include a plurality of BSSIDs. Accordingly, the MFP 120 connects to an AP having the highest signal quality out of the plurality of BSSIDs. Note that the AP having the highest signal quality is the AP having the highest radio wave strength.

Note that in step S708, when, for example, the BSSID to be connected to is specified by the user (when a determination of "yes" is made in step S705), the MFP 120 connects to the specified BSSID.

In this manner, according to the present embodiment, when accepting an instruction to operate as a child station, the MFP 120 can connect to an AP having enabled or disabled multi-link communication on the basis of the determination in steps S704 to S706 for enabling multi-link communication during operation as a child station. This makes it possible to improve the convenience for the user in the MFP 120, which is capable of multi-link communication.

Although the present embodiment describes a configuration in which the processing from step S704 to step S708 is performed when the network settings have been started in step S701 and the MFP is determined to operate as a child station in step S702, the configuration is not limited thereto. For example, the MFP 120 may perform the processing of steps S704 to S708 when the communication quality (radio wave strength) of the AP connected to drops. In other words, the MFP 120 may perform the processing of steps S704 to S708 when it is necessary to re-determine the AP to be connected to.

In step S709, the MFP 120 determines whether to start a communication mode operating as a parent station (AP) in the network settings. If the MFP 120 determines to start a communication mode operating as a parent station (AP) in the network settings, the sequence moves to step S710. However, if the MFP 120 determines not to start a communication mode operating as a parent station (AP) in the network settings, the sequence moves to step S711.

Specifically, in step S709, for example, the MFP 120 makes this determination on the basis of the instruction to start the network settings received in step S701. In other words, for example, when the network settings have been started on the basis of accepting a direct connection user operation, a connection setting user operation, or an initial setup user operation, a determination of "yes" is made in this step. Additionally, for example, when the network settings have been started on the basis of the direct setting command being received, a determination of "yes" is made in this step. Additionally, for example, when the network settings have been started on the basis of, for example, accepting a changing user operation, a determination of "no" is made in this step.

In step S710, the MFP 120 starts a communication mode operating as a parent station (AP) in a setting in which multi-link communication is not used. In other words, when starting as a parent station, the MFP 120 performs control for disabling multi-link communication. Specifically, the MFP 120 starts a communication mode corresponding to the user operation in step S701 (software AP mode, WFD mode, or connection setting mode). Here, the MFP 120 starts so that the wireless unit 226 operates on a single frequency channel.

In the present embodiment, the wireless unit 226 of the MFP 120 does not support multi-link communication when operating as a parent station, as described above. Accordingly, in the present embodiment, when the instruction to start as a parent station is accepted in the network settings, the MFP 120 performs control to disable multi-link communication.

In step S711, the MFP 120 changes the network settings in accordance with the user operation in step S701. In step S711, for example, the MFP 120 may perform processing for changing the SSID of the direct communication mode, or may perform processing for changing the password of the direct communication mode.

According to the present embodiment as described thus far, when the instruction to start the network settings of the MFP 120 is accepted, the MFP 120 determines whether to start in a communication mode in which the wireless unit 226 is caused to operate as a child station. When causing the wireless unit 226 to operate as a child station, the MFP 120 performs control to switch whether multi-link communication is enabled in the communication between the MFP 120 and the AP MLD on the basis of a condition for performing multi-link communication. On the other hand, when starting in a communication mode in which the wireless unit 226 is caused to operate as a parent station, the MFP 120 performs control to disable multi-link communication and start the wireless unit 226 as a parent station. In this manner, when causing the wireless unit 226 to operate as a child station, a parent station, or the like, the MFP 120 switches the setting for multi-link communication to be enabled or disabled on the basis of the condition for performing multi-link communication. Through this, it is possible to improve the usability of a wireless connection for an electronic device capable of using a plurality of links simultaneously.

Although the foregoing described a configuration in which all of the determinations in steps S704 to S706 are made, the configuration is not limited thereto, and some of the determinations in steps S704 to S706 need not be made. For example, in a configuration where the determinations of step S704 and step S706 are made but the determination of step S705 is not made, the sequence moves to step S706 when a determination of "yes" is made in step S704.

### Second Embodiment

A second embodiment will be described next, focusing on differences from the first embodiment. The first embodiment assumed an MFP 120 in which the wireless unit 226 supports multi-link communication when operating as a child station, whereas the wireless unit 226 does not support multi-link communication when operating as a parent station, for performance reasons, for example. The first embodiment furthermore described a configuration for switching between enabling and disabling multi-link communication when the MFP 120 causes the wireless unit 226 to operate as a parent station, a child station, or the like.

The present embodiment assumes an MFP 120 in which the wireless unit 226 supports multi-link communication both when operating as a child station and when operating as a parent station. The present embodiment will further describe a configuration in which a condition pertaining to an operating state for a parent station is included as a condition for performing multi-link communication when the MFP 120 causes the wireless unit 226 to operate as a child station.

For example, in an electronic device such as the MFP 120, the number of antennas for communicating with the mobile terminal device 140, an external AP, or the like may be low. In addition, as described above, the MFP 120 can perform communication in a communication mode operating as a child station in parallel with communication in a communication mode operating as a parent station. For example, if the number of antennas provided in the MFP 120 is low, packet loss may occur when performing multi-link communication on the child station (STA) side of the MFP 120, depending on the number of STAs connected to the parent station (AP) side of the MFP 120. Accordingly, in the present embodiment, a condition pertaining to an operating state on the parent station side is included as a condition for performing multi-link communication in the determination made when the wireless unit 226 is caused to operate as a child station.

In the present embodiment, the MFP 120 includes a predetermined number of antennas (not shown). The predetermined number may be, for example, one. Additionally, the wireless unit 226 of the MFP 120 according to the present embodiment supports multi-link communication in both a communication mode operating as a child station and a communication mode operating as a parent station.

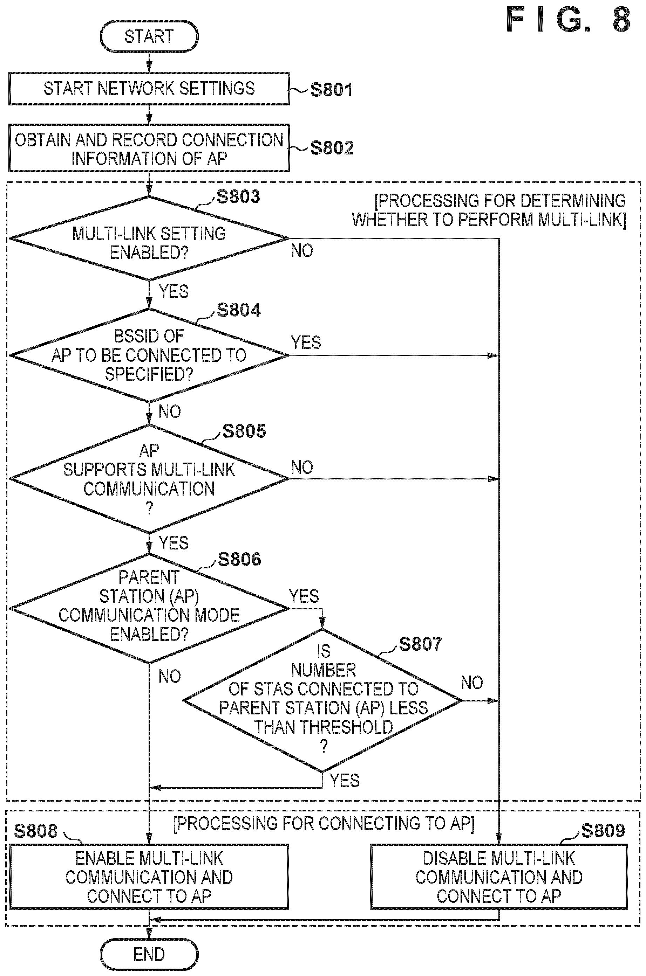

Processing performed by the MFP 120 according to the present embodiment will be described next with reference to FIG. 8. In this flowchart, the processing performed by the MFP 120 is implemented by the CPU 212 reading out various programs stored in a memory such as the ROM 213 of the MFP 120 into the RAM 214 and executing those programs.

In step S801, the MFP 120 starts network settings. Note that the instruction to start the network settings accepted in the present embodiment is an instruction to enable infrastructure connection mode. In other words, the instruction is an infrastructure connection user operation or an infrastructure setting command.

In step S802, the MFP 120 obtains the AP information and stores the obtained information in the RAM 214 and/or the non-volatile memory 215. This processing is performed in the same manner as, for example, step S703, and will therefore not be described in detail.

Next, in steps S803 to S807, the MFP 120 determines whether to perform multi-link communication on the basis of a condition for performing multi-link communication in operations performed as a child station.

In step S803, the MFP 120 determines whether the multi-link setting is enabled for when the wireless unit 226 is to be operated as a child station. If the MFP 120 determines that the setting is enabled, the sequence moves to step S804. However, if the MFP 120 determines that the setting is disabled, the sequence moves to step S809.

In step S804, the MFP 120 determines whether the BSSID of the AP to be connected to is specified. If the MFP 120 determines that the BSSID is specified, the sequence moves to step S809. However, if the MFP 120 determines that the BSSID is not specified, the sequence moves to step S805.

In step S805, the MFP 120 determines whether the AP to be connected to supports multi-link communication. If the MFP 120 determines that multi-link communication is supported, the sequence moves to step S806. However, if the MFP 120 determines that multi-link communication is not supported, the sequence moves to step S809.

The processing of steps S803 to S805 is the same as the processing of steps S704 to S706, and will therefore not be described in detail.

In steps S806 and S807, the MFP 120 makes a determination in accordance with a connection status of a communication mode in which operation is performed as a parent station. In other words, in the present embodiment, a condition pertaining to an operating state on the parent station side is included as a condition for performing multi-link communication in the determination made when the wireless unit 226 is caused to operate as a child station.

In step S806, the MFP 120 determines whether the communication mode of the parent station (AP) is enabled. In other words, the MFP 120 determines whether the wireless unit 226 is operating as a parent station. If the MFP 120 determines that the communication mode of the parent station (AP) is enabled, the sequence moves to step S807. However, if the MFP 120 determines that the communication mode of the parent station (AP) is disabled, the sequence moves to step S808. Note that the communication modes in which the MFP operates as a parent station (AP) are, for example, software AP mode, WFD mode, and connection setting mode.

In step S807, the MFP 120 determines whether the number of STAs connected to the wireless unit 226 operating as a parent station is less than a threshold or at least the threshold. If the MFP 120 determines that the number is less than the threshold, the sequence moves to step S808. However, if the MFP 120 determines that the number is at least the threshold, the sequence moves to step S809. For example, when starting the wireless unit 226 as a parent station, the MFP 120 stores the number of STAs currently connected in the RAM 214 and/or the non-volatile memory 215. In step S807, for example, the MFP 120 makes this determination with reference to the stored number of STAs currently connected.

The threshold may be set to a numerical value of at least 1 and no greater than 5, for example. Note that the threshold may be set in accordance with the capabilities of the wireless unit 226, the number of wireless antennas provided in the MFP 120, and the like.

In step S808, the MFP 120 enables multi-link and performs control for connecting, as a child station, to the AP to be connected to, which serves as a parent station. This processing is the same as step S707, and will therefore not be described in detail.

In step S809, the MFP 120 performs processing for connecting to the AP using a single frequency channel, without using multi-link communication. Additionally, in the present embodiment, when the processing of step S809 is performed in response to determining that the number is at least the threshold in the determination of step S807, the MFP 120 connects to the AP having the highest communication quality on the basis of the AP information stored in step S802. Note that this processing is performed in the same manner as step S708, and will therefore not be described in detail.

According to the present embodiment as described thus far, when causing the wireless unit 226 of the MFP 120 to operate as a child station, a condition pertaining to a state on the parent station side is included as a condition for performing multi-link communication. Including a condition pertaining to the state on the parent station side as a condition for performing multi-link communication in this manner makes it possible to switch whether multi-link communication is enabled appropriately in accordance with the state of the MFP 120, even when, for example, multi-link communication is supported in both communication in which the wireless unit 226 of the MFP 120 operates as a parent station and communication in which the wireless unit 226 operates as a child station. Additionally, even when the number of wireless antennas provided in the MFP 120 is low, packet loss can be suppressed by the MFP 120 performing multi-link communication. It is therefore possible to improve the usability of a wireless connection for an electronic device capable of using a plurality of links simultaneously.

Although the foregoing described a configuration in which all of the determinations in steps S803 to S807 are made, the configuration is not limited thereto, and some of the determinations in steps S803 to S807 need not be made. For example, in a configuration where the determinations of step S806 and step S807 are made but no other determinations are made, the sequence moves to step S806 after step S802.

### Third Embodiment

A third embodiment will be described next, focusing on differences from the first and second embodiments. The present embodiment will describe a configuration in which a condition pertaining to a state of the MFP 120 is included as a condition for performing multi-link communication when the wireless unit 226 is caused to operate as a parent station.

In the present embodiment, the MFP 120 supports multi-link communication in both a communication mode operating as a child station and a communication mode operating as a parent station.

In addition, when the user who purchased the MFP 120 turns on the power for the first time, the MFP 120 according to the present embodiment performs initial settings from the factory shipment state, and thus control is performed to start a processing sequence for initial startup (initial setup) that is different from normal startup.

For example, the MFP 120 is shipped from the factory without an ink tank, a print head, or the like mounted in the printing unit 222. Accordingly, as the initial setup, the MFP 120 makes a notification to prompt the user to mount the included ink tank, print head, or the like in the MFP 120 on the basis of the power being turned on for the first time, for example. The notification may be displayed in the console unit 220 or the like, for example. It is thus necessary for the user to prepare the MFP 120 for use during initial startup.

In addition, as described above, the MFP 120 can accept the initial setup user operation at the initial startup (when the power is turned on for the first time). Then, when the initial setup user operation is accepted, the MFP 120 automatically starts connection setting mode as the initial setup, and stands by for the connection of the mobile terminal device 140. In other words, the MFP 120 operates as a setup AP serving as a parent station. The MFP 120 establishes a connection with the mobile terminal device 140 by operating as a setup AP. The MFP 120 then obtains connection information for connecting to the AP using a predetermined communication protocol, and performs connection processing with the AP using the obtained connection information. Note that if the connection information for connecting to the AP is not recorded in the RAM 214 and/or the non-volatile memory 215, the MFP 120 may operate as a setup AP even when the power is turned on at a time other than during the initial startup.

Additionally, when the MFP 120 has completed all of the initial setup, the value of an initial startup flag stored in the non-volatile memory 215 is changed from a value indicating an initial startup state to a value indicating a non-initial startup state. Note that the non-initial startup state corresponds to a state during normal use. The initial startup flag is information indicating whether the MFP 120 is in the initial startup state.

In this manner, as the initial setup, the MFP 120 makes a notification to the user, operates as a setup AP, or the like. When the MFP 120 performs the initial setup in this manner, the amount of data transmitted or received in communication with a device such as the mobile terminal device 140, an external access point, or the like is low. In other words, during the initial setup, it is not necessary to perform high-throughput communication such as multi-link communication. Accordingly, the present embodiment will describe a configuration in which when performing initial setup, the MFP 120 performs control to disable multi-link communication. Through this, when it is not necessary for the MFP 120 to perform multi-link communication, the multi-link communication can be disabled, which makes it possible to suppress the power consumption of the MFP 120.

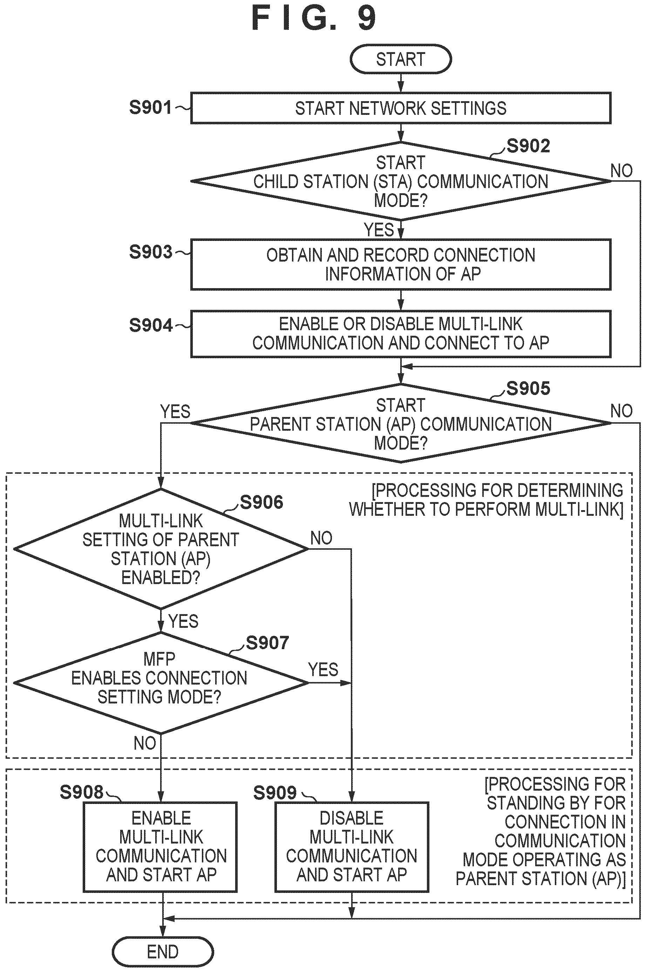

Processing performed by the MFP 120 according to the present embodiment will be described next with reference to FIG. 9. FIG. 9 is a flowchart illustrating an example of processing by which the MFP 120 determines whether to perform multi-link communication in accordance with the state of the MFP 120. In this flowchart, the processing performed by the MFP 120 is implemented by the CPU 212 reading out various programs stored in a memory such as the ROM 213 of the MFP 120 into the RAM 214 and executing those programs.

In step S901, the MFP 120 starts network settings. This processing is the same as the processing in step S701, and will therefore not be described in detail.

In step S902, the MFP 120 determines whether to start a communication mode operating as a child station (STA) in the network settings. If the MFP 120 determines to start the communication mode operating as a child station (STA), the sequence moves to step S903. However, if the MFP 120 determines not to start the communication mode operating as a child station (STA), the sequence moves to step S905. The specific determination made in this processing is similar to that made in step S702, and will therefore not be described in detail.

In step S903, the MFP 120 obtains the AP information and stores the obtained information in the RAM 214 and/or the non-volatile memory 215. This processing is performed in the same manner as, for example, steps S701 and S802, and will therefore not be described in detail.

In step S904, the MFP 120 determines whether to perform multi-link on the basis of a condition for performing multi-link communication with the AP to be connected to, and performs control for enabling or disabling multi-link communication and connecting, as a child station, to the AP to be connected to, which serves as a parent station. This processing is similar to steps S704 to S708. Alternatively, this processing is similar to steps S802 to S808. Detailed descriptions thereof will therefore be omitted. In other words, in step S904, the MFP 120 makes the same determination as in the processing described with respect to steps S704 to S706, and executes the same processing as the processing in step S707 or step S708 in accordance with the determination result. Alternatively, in step S904, the MFP 120 makes the same determination as in the processing described with respect to steps S803 to S807, and executes the same processing as the processing in step S808 or step S809 in accordance with the determination result.

In step S905, the MFP 120 determines whether a communication mode in for operating as the parent station (AP) is enabled. The communication modes in which the MFP operates as a parent station (AP) are, for example, software AP mode, WFD mode, and connection setting mode. Specifically, for example, when starting connection setting mode on the basis of a user operation such as selecting "set up using PC/smartphone" in FIG. 3E, when starting WFD mode on the basis of a user operation such as selecting the "Wireless Direct" item in FIG. 3C, or the like, the MFP 120 moves the sequence to step S906. The MFP 120 also moves the sequence to step S906 when a communication mode for operating as a parent station (AP) has already been started. In other cases, the MFP 120 moves the sequence to step S909.

Next, in steps S906 and S907, the MFP 120 determines whether to enable multi-link communication in a communication mode for operating as a parent station (AP).

In step S906, the MFP 120 determines whether a setting for multi-link is enabled for when the wireless unit 226 is to be operated as a parent station. If the MFP 120 determines that the setting is enabled, the sequence moves to step S907. However, if the MFP 120 determines that the setting is disabled, the sequence moves to step S909.

Specifically, in step S906, for example, the MFP 120 obtains the setting information stored in the RAM 214 and/or the non-volatile memory 215. The setting information obtained by the MFP 120 in step S906 is information indicating that multi-link communication is enabled/disabled when starting the wireless unit 226 as a parent station. For example, the screen illustrated in FIG. 3F may be provided with an interface (not shown) through which a setting can be made to enable or disable multi-link communication when starting the wireless unit 226 as a parent station. The MFP 120 may store the setting information when starting the wireless unit 226 as a parent station on the basis of a user operation made in this interface (not shown). Note that the setting information when the wireless unit 226 is started as a parent station may be stored by receiving a specific signal from an external device such as the mobile terminal device 140. Note also that the setting information when the wireless unit 226 is started as a parent station may have a setting which is enabled by default. Accordingly, when a user operation in the MFP 120, such as changing the settings for enabling/disabling multi-link communication, has not been made, or when the specific signal has not been received from an external device such as the mobile terminal device 140, the setting information is information indicating that multi-link communication is enabled. In other words, in step S906, if the obtained setting information is information indicating that the setting is enabled, the MFP 120 moves the sequence to step S907. However, if the obtained setting information is information indicating that the setting is disabled, the MFP 120 moves the sequence to step S909.

In step S907, the MFP 120 determines whether to enable (start) connection setting mode. If the MFP 120 determines to enable connection setting mode, the sequence moves to step S908. However, if the MFP 120 determines not to enable connection setting mode, the sequence moves to step S909.

Specifically, in step S907, when the MFP 120 has started the processing of this flowchart on the basis of a direct connection user operation being accepted, a determination of "no" is made. On the other hand, when the MFP 120 has started the processing of this flowchart on the basis of a connection setting user operation or an initial setup user operation being accepted, a determination of "yes" is made.

In step S908, the MFP 120 starts a communication mode for operating as a parent station (AP) with multi-link communication enabled. Specifically, the MFP 120 starts direct communication mode. More specifically, the MFP 120 sends, over a plurality of channels, a Basic Multi-Link element included in the Beacon frame and the Probe Response frame sent in the communication mode for operating as a parent station (AP). At this time, the MFP 120 sends the information of the affiliated AP in the Basic Multi-Link element.

In step S909, the MFP 120 causes a communication mode for operating as a parent station (AP) to operate, having disabled multi-link communication. Specifically, the MFP 120 starts connection setting mode. More specifically, the MFP 120 sends, over a single channel, a Basic Multi-Link element included in the Beacon frame and the Probe Response frame sent in the communication mode for operating as a parent station (AP).

According to the present embodiment as described thus far, if the communication mode in which the MFP 120 operates as the parent station (AP) is a communication mode for setup that is started automatically without a user operation, the MFP 120 stands by for a connection under settings in which multi-link communication is not performed. In addition, even if the communication mode in which the parent station (AP) operates is a communication mode started by a user operation, if the state of the MFP 120 is the initial startup state, the MFP 120 stands by for a connection under settings in which multi-link communication is not performed. When connection setting mode is started automatically, in the initial startup state, or the like, the mobile terminal device 140 mainly stands by for a connection, the setup communication protocol, or the like, and thus the amount of data sent and received is low. In such communication, where the amount of data is small, there is little need for high-throughput communication such as multi-link communication. Accordingly, in such a case, the power consumption of the MFP 120 can be suppressed by disabling multi-link communication. On the other hand, if a communication mode for operating as a parent station operates is enabled by a user operation, and if the MFP 120 is not in the initial startup state, the MFP 120 may receive, for example, a large amount of printing data. Multi-link communication is therefore enabled. This makes it possible to improve the communication throughput. In this manner, when starting a communication mode for operating as a parent station, the MFP 120 performs control for whether to enable multi-link communication on the basis of a condition for performing multi-link communication in a communication mode for operating as a parent station. It is therefore possible to improve the usability of a wireless connection for an electronic device capable of using a plurality of links simultaneously.

The above-described various types of control performed by the CPU 212 may be performed by a single piece of hardware, or the control of the apparatus as a whole may be performed by dividing the processing up among multiple pieces of hardware (e.g., multiple processors or circuits).

Additionally, although the foregoing embodiment describes a case where the present invention is applied in an MFP as an example, the present invention is not limited to this example, and can be applied in any wireless device that functions as an STA capable of performing processing in response to a request to change a connection destination from an AP. In other words, the present invention can be applied in personal computers, PDAs, tablet terminals, mobile telephone terminals such as smartphones, music players, game consoles, e-book readers, smart watches, various measurement devices (sensor devices) such as thermometers and hygrometers, and the like. The present invention can also be applied in digital cameras (including still cameras, video cameras, network cameras, and security cameras), printers, scanners, and drones. The present invention can also be applied in video output devices, audio output devices (e.g., smart speakers), streaming media players, wireless LAN client devices (adapters) to which USB terminals, LAN cable terminals, or the like can be connected, and the like. Video output devices include, for example, a device such as a set-top box, which obtains (downloads) a moving image or still image on the Internet, specified by a URL provided by an electronic device, and outputs the moving image or still image to a display device connected through a video output terminal such as an HDMI (registered trademark) terminal. Through this, streaming playback, a mirrored display (a display in which content displayed in an electronic device is also displayed in a display device), or the like is implemented in a display device. The video output device also includes a media player such as a television, a hard disk recorder, a Blu-ray recorder, a DVD recorder, or the like, as well as a head-mounted display, a projector, a television, a display device (monitor), a signage device, or the like. The present invention can also be applied in a device capable of connecting through Wi-Fi, or what is known as a "smart home appliance", such as an air conditioner, a refrigerator, a washing machine, a vacuum cleaner, an oven, a microwave oven, a lighting fixture, a heating appliance, a cooling appliance, or the like.

### Other Embodiments

Embodiment(s) of the present invention can also be realized by a computer of a system or apparatus that reads out and executes computer executable instructions (e.g., one or more programs) recorded on a storage medium (which may also be referred to more fully as a "non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A communication device (120) comprising:
first operation control means configured to cause the communication device (120) to operate in a first mode that is a mode for the communication device (120) to operate as a parent station and perform communication compliant with an IEEE 802.11 standard;
second operation control means configured to cause the communication device (120) to operate in a second mode that is a mode for the communication device (120) to operate as a parent station and perform communication compliant with an IEEE 802.11 standard, and that is different from the first mode; and
control means configured to control the communication device (120) to execute multi-link communication compliant with an IEEE 802.11be standard as communication in the first mode, and control the communication device (120) not to perform the multi-link communication, and to perform communication different from the multi-link communication, as communication in the second mode.

2. The communication device (120) according to claim 1, further comprising:
obtaining means configured to obtain setting information indicating whether a predetermined setting for executing the multi-link communication in the mode in which the communication device (120) is operating as the parent station is enabled or disabled,
in a case where the setting information indicates that the predetermined setting is enabled and a first trigger for causing the communication device (120) to operate in the first mode has occurred, the communication device (120) is controlled to perform the multi-link communication as the communication in the first mode,
in a case where a second trigger has occurred for causing the communication device (120) to operate in the second mode, the communication device (120) is controlled to perform communication different from the multi-link communication, without performing the multi-link communication, as the communication in the second mode, even if the setting information indicates that the predetermined setting is enabled, and
in a case where the setting information indicates that the predetermined setting is disabled, the communication device (120) is controlled to perform communication different from the multi-link communication, without performing the multi-link communication, as the communication in the first mode, even if the first trigger has occurred.

3. The communication device (120) according to claim 2, further comprising:
third accepting means configured to accept an operation for enabling the predetermined setting or an operation for disabling the predetermined setting,
in a case where the operation for enabling the predetermined setting is accepted, the setting information indicates that the predetermined setting is enabled, and
in a case where the operation for disabling the predetermined setting is accepted, the setting information indicates that the predetermined setting is disabled.

4. The communication device (120) according to claim 2, further comprising:
receiving means configured to receive a specific signal for enabling the predetermined setting,
in a case where the specific signal is received, the setting information indicates that the predetermined setting is enabled, and
in a case where the specific signal is not received, the setting information indicates that the predetermined setting is disabled.

5. The communication device (120) according to any one of claims 1 to 4,
wherein connection information for connecting to an access point enabled by the communication device (120) in the first mode and connection information for connecting to an access point enabled by the communication device (120) in the second mode are different.

6. The communication device (120) according to any one of claims 1 to 5,
wherein an amount of data communicated in the communication in the first mode is greater than an amount of data communicated in the communication in the second mode.

7. The communication device (120) according to any one of claims 1 to 6,
wherein in the communication in the first mode, at least one of a print job for causing the communication device (120) to perform printing and a scan job for causing the communication device (120) to perform scanning is communicated.

8. The communication device (120) according to any one of claims 1 to 7,
wherein in the communication in the second mode, connection information for connecting to an access point outside the communication device (120) is communicated.

9. The communication device (120) according to any one of claims 1 to 8,
wherein in the communication in the second mode, information for causing the communication device (120) to operate in the first mode is communicated.

10. The communication device (120) according to any one of claims 1 to 8,
wherein the communication device (120) operates in the first mode on the basis of a predetermined region, which is a region displayed by the communication device (120) and is a region for causing the communication device (120) to operate in the first mode, being operated in the communication device (120).

11. The communication device (120) according to any one of claims 1 to 8,
wherein the communication device (120) operates in the second mode on the basis of a button for causing the communication device (120) to operate in the second mode being pressed in the communication device (120).

12. The communication device (120) according to any one of claims 1 to 8,
wherein the communication device (120) operates in the second mode on the basis of a user operation for powering on the communication device (120) being accepted by the communication device (120) in a state where a communication mode is not set in the communication device (120).

13. The communication device (120) according to any one of claims 1 to 12, further comprising:
third operation control means configured to cause the communication device (120) to operate in a third mode that is a mode for the communication device (120) to operate as a child station and perform communication compliant with an IEEE 802.11 standard, and that is different from the first mode and the second mode, and
in a case where an access point to which the communication device (120) is to connect supports the multi-link communication, the communication device (120) is controlled to perform the multi-link communication as communication in the third mode.

14. The communication device (120) according to claim 13, further comprising:
obtaining means configured to obtain setting information indicating whether a predetermined setting for executing the multi-link communication in the mode in which the communication device (120) is operating as a child station is enabled or disabled,
in a case where the setting information indicates that the predetermined setting is enabled, the access point to which the communication device (120) is to connect supports the multi-link communication, and a predetermined trigger for causing the communication device (120) to operate in the third mode has occurred, the communication device (120) is controlled to perform the multi-link communication as the communication in the third mode, and
in a case where the setting information indicates that the predetermined setting is disabled, the communication device (120) is controlled to perform communication different from the multi-link communication, without performing the multi-link communication, as the communication in the third mode, even if the predetermined trigger has occurred.

15. The communication device (120) according to claim 13,
wherein in a case where the communication device (120) is not operating in the first mode or the second mode, the access point to which the communication device (120) is to connect supports the multi-link communication, and a predetermined trigger for causing the communication device (120) to operate in the third mode has occurred, the communication device (120) is controlled to perform the multi-link communication as the communication in the third mode, and
in a case where the communication device (120) is operating in the first mode or the second mode, the communication device (120) is controlled to perform communication different from the multi-link communication, without performing the multi-link communication, as the communication in the third mode, even if the predetermined trigger has occurred.

16. The communication device (120) according to claim 15,
wherein in a case where the number of child stations connecting to the communication device (120) operating in the first mode or the second mode is less than a predetermined threshold, the access point to which the communication device (120) is to connect supports the multi-link communication, and a predetermined trigger for causing the communication device (120) to operate in the third mode has occurred, the communication device (120) is controlled to perform the multi-link communication as the communication in the third mode, and
in a case where the number of child stations connecting to the communication device (120) operating in the first mode or the second mode is greater than or equal to the predetermined threshold, the communication device (120) is controlled to perform communication different from the multi-link communication, without performing the multi-link communication, as the communication in the third mode, even if the predetermined trigger has occurred.

17. The communication device (120) according to any one of claims 13 to 16,
wherein operation in the first mode and operation in the third mode can be performed in parallel.

18. The communication device (120) according to any one of claims 1 to 17, further comprising:
printing means configured to execute printing.

19. A control method for a communication device (120), the control method comprising:
causing the communication device (120) to operate in a first mode that is a mode for the communication device (120) to operate as a parent station and perform communication compliant with an IEEE 802.11 standard;
causing the communication device (120) to operate in a second mode that is a mode for the communication device (120) to operate as a parent station and perform communication compliant with an IEEE 802.11 standard, and that is different from the first mode; and
controlling the communication device (120) to execute multi-link communication compliant with an IEEE 802.11 be standard as communication in the first mode, and controlling the communication device (120) not to perform the multi-link communication, and to perform communication different from the multi-link communication, as communication in the second mode.

20. A computer-readable storage medium storing a program to cause a computer of a communication device (120) to function as:
first operation control means configured to cause the communication device (120) to operate in a first mode that is a mode for the communication device (120) to operate as a parent station and perform communication compliant with an IEEE 802.11 standard;
second operation control means configured to cause the communication device (120) to operate in a second mode that is a mode for the communication device (120) to operate as a parent station and perform communication compliant with an IEEE 802.11 standard, and that is different from the first mode; and
control means configured to control the communication device (120) to execute multi-link communication compliant with an IEEE 802.11be standard as communication in the first mode, and control the communication device (120) not to perform the multi-link communication, and to perform communication different from the multi-link communication, as communication in the second mode.

21. A program to cause a computer of a communication device (120) to function as:
first operation control means configured to cause the communication device (120) to operate in a first mode that is a mode for the communication device (120) to operate as a parent station and perform communication compliant with an IEEE 802.11 standard;
second operation control means configured to cause the communication device (120) to operate in a second mode that is a mode for the communication device (120) to operate as a parent station and perform communication compliant with an IEEE 802.11 standard, and that is different from the first mode; and
control means configured to control the communication device (120) to execute multi-link communication compliant with an IEEE 802.11be standard as communication in the first mode, and control the communication device (120) not to perform the multi-link communication, and to perform communication different from the multi-link communication, as communication in the second mode.
